(19) **Europäisches Patentamt / European Patent Office / Office européen des brevets**

(11) **EP 4 120 387 A2**

(12) # EUROPEAN PATENT APPLICATION

(43) Date of publication:
**18.01.2023 Bulletin 2023/03**

(21) Application number: **22191100.1**

(22) Date of filing: **18.06.2019**

(51) International Patent Classification (IPC):
$H01M\ 4/04^{(2006.01)}$ $\quad H01M\ 4/13^{(2010.01)}$
$H01M\ 4/38^{(2006.01)}$ $\quad H01M\ 4/62^{(2006.01)}$
$H01M\ 10/0525^{(2010.01)}$ $\quad H01M\ 10/42^{(2006.01)}$

(52) Cooperative Patent Classification (CPC):
**H01M 4/0416; H01M 4/13; H01M 4/382;
H01M 4/625; H01M 10/0525; H01M 10/4235;
Y02E 60/10; Y02E 60/13**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.06.2018 US 201862686420 P**

(62) Document number(s) of the earlier application(s) in accordance with Art. 76 EPC:
**19823012.0 / 3 807 944**

(71) Applicant: **3D Nano Batteries, LLC
West Palm Beach, FL 33411 (US)**

(72) Inventors:
- **HASHIM, Daniel, Paul
  Houston, 77005-2652 (US)**
- **FARAGUNA, Christopher M.
  Harrisburg, 17109 (US)**

(74) Representative: **Barker Brettell LLP
100 Hagley Road
Edgbaston
Birmingham B16 8QQ (GB)**

Remarks:
This application was filed on 18.08.2022 as a divisional application to the application mentioned under INID code 62.

(54) **ELECTRODES COMPRISING THREE-DIMENSIONAL HETEROATOM-DOPED CARBON NANOTUBE MACRO MATERIALS**

(57) Electrodes, including anodes and/or cathodes, comprising a three-dimensional boron-doped carbon nanotube macromaterial are disclosed. The anode and/or cathode can be prepared using chemical vapor deposition, using a metal foil, such as a copper foil, as a substrate, and in other embodiments, or can be adhered to a metal foil following preparation. The anode and/or cathode are porous, and a portion of the pores can be filled with appropriate anode or cathode active materials. Preferred active materials for the anode comprise lithium metal or lithium-containing alloys. Preferred active materials for the cathode comprise lithium salts, such as lithium oxide or lithium sulfide. Batteries, capacitors and supercapacitors comprising these anodes and/or cathodes are also disclosed.

Current Collectors

3-D Anode
(NiSn on porous Ni)

3-D Cathode
$(LiMnO_2$ on porous Ni)

**Figure 20**

**EP 4 120 387 A2**

## Description

This application claims priority to a provisional application number 62/686,420 filed on June 18, 2018 and which is incorporated herein in its entirety by reference.

## TECHNICAL FIELD

The present disclosure relates to electrodes comprising three-dimensional heteroatom-doped carbon nanotube macromaterials, and batteries and capacitors comprising the electrodes. The three-dimensional materials can be attached to a metal to form an anode, or to a semiconductor to form a cathode. The materials are highly porous. The pores can be filled or partially filled with various metals, such as lithium, to form anodes, or with metal salts, such as lithium sulfide, to form cathodes.

## BACKGROUND

Due to fluctuations in oil prices and a global interest in green energy, there has been a surge in environmental regulations and energy policies for reducing fossil fuel usage. Under these environmental regulations and energy policies, eco-friendly electric vehicles and smart grids have received a lot of attention, which has driven interest in improved energy storage devices.

A "secondary battery" is a key component in an energy storage device. The secondary battery" is configured to convert electric energy into chemical energy to be stored, and then convert the stored chemical energy into electric energy to be used. These batteries include a variety of components, including an anode, a cathode, a battery/capacitor, a module/pack/battery management system, and the like. In most batteries today, the anode and cathode electrode are comprised of a current collector with an active material deposited on top of a foil substrate.

Examples of such batteries include lithium ion batteries, lithium ion polymer batteries, metal air batteries, redox flow batteries, sodium sulfur batteries, magnesium ion batteries, sodium ion batteries, nickel hydrogen batteries, NiCd batteries, and the like. The batteries can be classified depending on the purpose of application, into small-scale energy storage systems such as mobile technologies; medium-scale energy storage systems such as electric vehicles and home lithium battery cells/modules; and large-scale energy storage systems such as large-sized batteries.

Lithium ion batteries have high energy density and thus have been supplied as power sources for mobile phones, PC, and digital cameras, and their use has been expanded to power sources for hybrid car or electric vehicles, but some prerequisites such as safety and cycle characteristics still remain. One concern is that the lithium ion batteries degrade over time, limiting their effective life cycle.

Activated carbon has been used as a carbonaceous electrode material, but there are various alternative materials, such as graphene, carbon nanotubes, carbide-induced carbon, and templated carbon. Particularly, graphene has excellent physical and electrical properties and is a noticeable new material. However, in order to show its excellent properties, graphene needs to be exfoliated to atom layer thickness, and such mechanical exfoliation has a low yield. Therefore, currently, a method of obtaining reduced graphene by preparing graphene oxide and then reducing the graphene oxide via a chemical process is the most commonly used. However, the reduction method using a high-temperature reducing gas is not suitable for mass production and increases the unit cost of production.

It would be advantageous to have batteries which have higher energy densities, and longer life cycles, than conventional lithium ion batteries. The present invention provides such batteries.

## SUMMARY OF THE INVENTION

In one embodiment, the invention relates to electrode materials comprising a three-dimensional heteroatom-doped carbon nanotube macromaterial. In one aspect of this embodiment, the three-dimensional heteroatom-doped carbon nanotube macromaterial, particularly where the heteroatom is boron, can be prepared as described in U.S. Serial No. 13/424,185 by Dr. Daniel Hashim.

In one aspect of this embodiment, the electrode is an anode. In some embodiments, the anode is prepared using chemical vapor deposition, using a metal foil, such as a copper foil, as a substrate, and in other embodiments, it is adhered to a metal foil following preparation. In other embodiments, the anode is porous, and a portion of the pores are filled with a metal, such as lithium metal. In still other embodiments, the anode is porous, a portion of the pores are filled with a metal, and the anode is prepared using chemical vapor deposition, using a metal foil, such as a copper foil, as a substrate, or is adhered to a metal foil following preparation.

In another aspect of this embodiment, the electrode is a cathode. In some embodiments, the cathode is prepared using chemical vapor deposition, using a metal foil, such as a copper foil, as a substrate, and in other embodiments, is adhered to a metal foil following preparation. In other embodiments, the cathode is porous, and a portion of the pores are filled with one or more metal ions, such as lithium ions. In still other embodiments, the cathode is porous, a portion of the pores are filled with one or more metal ions, and the cathode is prepared using chemical vapor deposition, using a metal foil, such as a copper foil, as a substrate, or is adhered to a metal foil following preparation.

As disclosed in U.S. Serial No. 13/424,185, the three-dimensional carbon nanotube structures comprising boron-containing carbon nanotubes (also referred to herein as CNT foam material), can be prepared directly during chemical vapor deposition synthesis of carbon nanotubes, by reacting a hydrocarbon, a boron source, and a metal catalyst source into a chemical vapor deposition reactor, wherein the ratio of the metal atoms to the boron atoms present in the reactor is between 2 and 20, for example, between 4 and 6.

Using this ratio of carbon, boron, and metal catalyst, it is possible to form a highly porous, three dimensional network of boron-doped carbon nanotubes, which are electrically conductive, and offer excellent physical and chemical properties. When partially filled with lithium metal (anode) or lithium salts (cathode), the electrodes have longer useful lifetimes, before dendrite formation, than conventional lithium batteries. Further, in some embodiments, the electrical capacity significantly exceeds that of conventional lithium batteries.

In some embodiments, electrodes produced using the CNT foam material greatly enhance the electrode's power density and final capacitor components resulting from embedding active materials into the foam structure. A capacitor having a submicron-scale, three-dimensional porous conductive foam structure as an anode, separated from the counter electrode material, that fills all or part of the void space of the porous foam structure, can significantly increase the power density of the final energy storage devices.

In still other embodiments, the invention relates to a capacitor which combines a three-dimensional conducting porous foam current collector, forming a porous anode, and using a solid-state or conventional electrolyte and film-based or coatable separator material. Similar to the rechargeable battery, the 3D nature of the CNT foam or sponge to integrate the electrodes, electrolyte and separator into a final package that can be conformably and hermetically sealed for final industrial use.

In some embodiments, a cathode and/or an anode as described herein are used in an energy storage device, such as a battery, for example, a rechargeable battery. Energy storage devices including one or both of the anode and cathode described herein also typically include an electrolyte and a separator, as well as other components. The electrolyte and the separator may be appropriately selected by those skilled in the art from among those known in the art and may be used without particular limitations.

In one embodiment, the energy storage device is a rechargeable battery, such as a lithium battery, and includes an electrode assembly including a positive electrode, a negative electrode facing the positive electrode, a separator interposed between the negative electrode and the positive electrode, an electrolyte solution impregnating the positive electrode, the negative electrode, and the separator, a battery case housing the electrode assembly, and a sealing member sealing the battery case.

The invention provides, inter alia, the subject matter of the following clauses:

1. An anode comprising a three dimensional boron-containing carbon nanotube foam.

2. The anode of Clause 1, wherein the anode is formed on or adhered to a metal foil.

3. The anode of Clause 2, wherein the metal foil is a copper foil or an aluminum foil.

4. The anode of Clause 1, wherein an active material is impregnated within the foam and/ or coated onto the foam.

5. The anode of Clause 4, wherein the active material is selected from the group consisting of lithium metal, a material that reversibly intercalates/deintercalates lithium ions, a lithium metal alloy, a material capable of doping and dedoping lithium, or a transition metal oxide.

6. The anode of Clause 4, wherein the active material is lithium metal or an alloy comprising lithium.

7. The anode of Clause 4, wherein the anode is formed on or adhered to a metal foil.

8. The anode of Clause 7, wherein the metal foil is a copper foil or an aluminum foil.

9. The anode of Clause 7, wherein the active material is selected from the group consisting of lithium metal, a material that reversibly intercalates/deintercalates lithium ions, a lithium metal alloy, a material capable of doping and dedoping lithium, or a transition metal oxide.

10. The anode of Clause 1, wherein the three dimensional boron-containing carbon nanotube foam is formed using a CVD process, wherein the foam is formed on a metal foil.

11. A cathode comprising a three dimensional boron-containing carbon nanotube foam.

12. The cathode of Clause 11, wherein the anode is formed on or adhered to a metal foil.

13. The cathode of Clause 12, wherein the metal foil is a copper foil or an aluminum foil.

14. The cathode of Clause 11, wherein an active material is impregnated within the foam and/ or coated onto the foam.

15. The cathode of Clause 14, wherein the active material is selected from the group consisting of lithium oxide, lithium sulfide, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, $LiCoO_2$, $LiMn_2O_4$, $LiFePO_4$, $Li_{1-x}Fe_xPO_4$ ($0 \leq x \leq 1$), $Li[Mn_{2-x}M_x]O_4$ (M=Co, Ni, Cr, Al, Mg, $0 \leq x \leq 0.1$), $Li_aCoM_aO_2$, $Li_{1-b}CoM'_yO_2$ (M and M' represent W, Mo, Zr, Ti, Mg, Ta, Al, Fe, V, Cr, and/or Nb; $1 \leq a \leq 1.2$, $0 < b \leq 0.05$, $0 \leq x \leq 0.02$ and $0 \leq y \leq 0.02$), $LiNiO_2$, $LiNiMnCoO_2$, $Li_2FePO_4F$, $LiCo_{0.33}Ni_{0.33}Mn_{0.33}O_2$, $Li(Li_aNi_xMn_yCo_z)O_2$ (also known as NMC), $LiNiCoAlO_2$, $Li_4Ti_5O_{12}$, $Li_3V_2(PO_4)_3$, and combinations thereof.

16. The cathode of Clause 14, wherein the active material is lithium oxide or lithium sulfide.

17. The cathode of Clause 14, wherein the anode is formed on or adhered to a metal foil.

18. The cathode of Clause 17, wherein the metal foil is a copper foil or an aluminum foil.

19. The cathode of Clause 17, wherein the active material is selected from the group consisting of lithium oxide, lithium sulfide, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, $LiCoO_2$, $LiMn_2O_4$, $LiFePO_4$, $Li_{1-x}Fe_xPO_4$ ($0 \leq x \leq 1$), $Li[Mn_{2-x}M_x]O_4$ (M=Co, Ni, Cr, Al, Mg, $0 \leq x \leq 0.1$), $Li_aCoM_aO_2$, $Li_{1-b}CoM'_yO_2$ (M and M' represent W, Mo, Zr, Ti, Mg, Ta, Al, Fe, V, Cr, and/or Nb; $1 \leq a \leq 1.2$, $0 < b \leq 0.05$, $0 \leq x \leq 0.02$ and $0 \leq y \leq 0.02$), $LiNiO_2$, $LiNiMnCoO_2$, $Li_2FePO_4F$, $LiCo_{0.33}Ni_{0.33}Mn_{0.33}O_2$, $Li(Li_aNi_xMn_yCo_z)O_2$ (also known as NMC), $LiNiCoAlO_2$, $Li_4Ti_5O_{12}$, $Li_3V_2(PO_4)_3$, and combinations thereof.

20. The cathode of Clause 11, wherein the three dimensional boron-containing carbon nanotube foam is formed using a CVD process, wherein the foam is formed on a metal foil.

21. A battery comprising an anode of any of Clauses 1-10.

22. A battery comprising a cathode of any of Clauses 11-20.

23. A capacitor or supercapacitor comprising an anode of any of Clauses 1-10.

24. A capacitor or supercapacitor comprising a cathode of any of Clauses 11-20.

These and other embodiments will be better understood with reference to the following detailed description.

**BRIEF DESCRIPTION OF THE FIGURES**

Figure 1 is a diagram showing one embodiment of a resistivity apparatus.

Figure 2 is a resistivity apparatus.

Figure 3 is a diagram of a stainless steel anode.

Figure 4 is a diagram of a CNT foam anode.

Figure 5 is a chart of baseline SS anode configuration, C/10 CC charge/discharge.

Figure 6 is a chart of capacity retention of cell with 3D CNT foam.

Figure 7 is a chart of baseline SS anode, cell #3.

Figure 8 is a chart of a close-up of baseline SS anode plot.

Figure 9 is a chart of 3D CNT foam anode.

Figure 10 is a chart of a close-up of 3D CNT foam anode.

Figure 11 is chart of the impact of Li loss on cell cycling.

Figure 12 is 3DNB_CNT_NMC_091917_SW_1. Charged, 0.8X magnification.

Figure 13 is 3DNB_CNT_NMC_091917_SW_1. Charged. 10X magnification.

Figure 14 is 3DNB_SS_NMC_091917_SW_1. Stainless Steel Anode. 0.8X magnification with lithium plating on separator and stainless steel current collector.

Figure 15 is a chart showing CNT Foam delithiation capacity at 0.35 mA (-0.15C), shown in terms of cell capacity (mAhr/g) vs. cycles.

Figure 16 is a chart showing graphite lithiation, showing 3 voltage plateaus, in terms of cell potential (V) vs. cell capacity (mAhr/g).

Figure 17 is a chart showing a current/voltage plot of the first CNT lithiation, in terms of cell potential (V) vs. cell capacity (mAhr/g).

Figure 18 is a chart showing dQ/dV versus cell potential (V).

Figure 19 is a drawing of one embodiment of a rechargeable battery, showing an anode, a cathode, a separator, a can, and a header.

Figure 20 is a drawing of a complete anode/cathode/separator battery cell formed within a single continuous or connected CNT Foam substrate, where an anode material, separator and cathode material are injected into a 3D Foam material, and separation occurs between each of the component layers. The material is sandwiched between two film layers, with current collectors (+ and -) shown at the front of the battery cell.

## DETAILED DESCRIPTION

In one aspect of this embodiment, the electrode is an anode. In some embodiments, the anode is prepared using chemical vapor deposition, using a metal foil, such as a copper foil, as a substrate, and in other embodiments, it is adhered to a metal foil following preparation. In other embodiments, the anode is porous, and a portion of the pores are filled with a metal, such as lithium metal. In still other embodiments, the anode is porous, a portion of the pores are filled with a metal, and the anode is prepared using chemical vapor deposition, using a metal foil, such as a copper foil, as a substrate, or is adhered to a metal foil following preparation.

In another aspect of this embodiment, the electrode is a cathode. In some embodiments, the cathode is prepared using chemical vapor deposition, using a metal foil, such as a copper foil, as a substrate, and in other embodiments, is adhered to a metal foil following preparation. In other embodiments, the cathode is porous, and a portion of the pores are filled with one or more metal ions, such as lithium ions. In still other embodiments, the cathode is porous, a portion of the pores are filled with one or more metal ions, and the cathode is prepared using chemical vapor deposition, using a metal foil, such as a copper foil, as a substrate, or is adhered to a metal foil following preparation.

In some embodiments, electrodes produced using the CNT foam material greatly enhance the electrode's power density and final capacitor components resulting from embedding active materials into the foam structure. A capacitor having a submicron-scale, three-dimensional porous conductive foam structure as an anode, separated from the counter electrode material, that fills all or part of the void space of the porous foam structure, can significantly increase the power density of the final energy storage devices.

In still other embodiments, the invention relates to a capacitor which combines a three-dimensional conducting porous foam current collector, forming a porous anode, and using a solid-state or conventional electrolyte and film-based or coatable separator material. Similar to the rechargeable battery, the 3D nature of the CNT foam or sponge to integrate the electrodes, electrolyte and separator into a final package that can be conformably and hermetically sealed for final industrial use.

In some embodiments, a cathode and/or an anode as described herein are used in an energy storage device, such as a battery, for example, a rechargeable battery. Energy storage devices including one or both of the anode and cathode described herein also typically include an electrolyte and a separator, as well as other components. The electrolyte and the separator may be appropriately selected by those skilled in the art from among those known in the art and may be used without particular limitations.

In one embodiment, the energy storage device is a rechargeable battery, such as a lithium battery, and includes an electrode assembly including a positive electrode, a negative electrode facing the positive electrode, a separator interposed between the negative electrode and the positive electrode, an electrolyte solution impregnating the positive electrode, the negative electrode, and the separator, a battery case housing the electrode assembly, and a sealing member sealing the battery case.

Hereinafter, examples will be described in detail with reference to the accompanying drawings so that the present disclosure may be readily implemented by those skilled in the art. However, it is to be noted that the present disclosure is not limited to the examples but can be embodied in various other ways. In drawings, parts irrelevant to the description are omitted for the simplicity of explanation, and like reference numerals denote like parts through the whole document.

Through the whole document, the term "connected to" or "coupled to" that is used to designate a connection or coupling of one element to another element includes both a case that an element is "directly connected or coupled to" another element and a case that an element is "electronically connected or coupled to" another element via still another element.

Through the whole document, the term "on" that is used to designate a position of one element with respect to another element includes both a case that the one element is adjacent to the another element and a case that any other element exists between these two elements.

Further, through the whole document, the term "comprises or includes" and/or "comprising or including" used in the document means that one or more other components, steps, operation and/or existence or addition of elements are not excluded in addition to the described components, steps, operation and/or elements unless context dictates otherwise. Through the whole document, the term "about or approximately" or "substantially" is intended to have meanings close to numerical values or ranges specified with an allowable error and intended to prevent accurate or absolute numerical values disclosed for understanding of the present disclosure from being illegally or unfairly used by any unconscionable third party. Through the whole document, the term "step of" does not mean "step for".

Through the whole document, the term "combination(s) of" included in Markush type description means mixture or combination of one or more components, steps, operations and/or elements selected from a group consisting of components, steps, operation and/or elements described in Markush type and thereby means that the disclosure includes one or more components, steps, operations and/or elements selected from the Markush group.

Through the whole document, a phrase in the form "A and/or B" means "A or B, or A and B".

## I. CNT Foam Materials Useful in Forming Anodes and/or Cathodes

As disclosed in U.S. Serial No. 13/424,185, the three-dimensional carbon nanotube structures comprising boron-containing carbon nanotubes (also referred to herein as CNT foam material), can be prepared directly during chemical vapor deposition synthesis of carbon nanotubes, by reacting a hydrocarbon, a boron source, and a metal catalyst source into a chemical vapor deposition reactor, wherein the ratio of the metal atoms to the boron atoms present in the reactor is between 2 and 20, for example, between 4 and 6.

Using this ratio of carbon, boron, and metal catalyst, it is possible to form a highly porous, three dimensional network of boron-doped carbon nanotubes, which are electrically conductive, and offer excellent physical and chemical properties. When partially filled with lithium metal (anode) or lithium salts (cathode), the electrodes have longer useful lifetimes, before dendrite formation, than conventional lithium batteries. Further, in some embodiments, the electrical capacity significantly exceeds that of conventional lithium batteries.

The CNT foam materials prepared using the methods described herein have a number of physical, mechanical, and chemical properties which allow them to function as supports for active materials, whether metals (anodes) or metal salts (cathodes).

Pore size 1 to 1000 nm.

CNT diameter 1 to 100 nm

CNT fraction 25-100% with other stuff, i.e. iron, nickel, carbon

Other conductive aids can be used as supplementary masterials, including carbon black and graphite.

Binder content can be reduced to the range of between about 1 and about 10%.

Toluene and hexane are representative carbon sources, ferrocene is a representative metal catalyst source, and organoboranes, such as triethylborane, organoborates, and combinations thereof are representative boron sources, though other sources for the carbon source, boron source, and metal catalyst source can be used.

In one aspect of the embodiment, the hydrocarbon, the boron source, and the metal catalyst source are combined to form a chemical precursor within the reactor.

In one embodiment, the hydrocarbon is between about 87 wt % and about 97 wt % of the hydrocarbon, the metal catalyst source, and the boron source in the reactor. In one embodiment, the metal catalyst source is between about 2.5 wt % and about 12 wt % of the hydrocarbon, the metal catalyst source, and the boron source in the reactor. In one embodiment, the boron source is between about 0.1 wt % and about 2 wt % of the hydrocarbon, the metal catalyst source, and the boron source in the reactor.

Range of CNT Foams

Three dimensional carbon nanotube foams (3DCNTs, or CNT foams) can be used as conductive aids in both cathodes and anode. CNT Foams can function in any capacity in lithium ion batteries as other forms of carbon nanotube, including single and multiwall CNTs. Conventional single and multiwall CNTs can be incorporated in lithium ion battery cathodes and anode both as conductive aid, mechanical support, and surface energy bridges.

Various aspects of the invention described herein involve using CNT's in a wide range of applications including as a 3-dimensional array, a foam structure, as an active part of the electrode active material, and as conductive aides in both anode and cathode electrodes.

CNT Foam Structure

The foam structure of the three dimensional foam material described herein provides numerous advantages over using single and multiwall nanotubes. Individual nanutubes are typically applied in a conventional manner, i.e. mixed into anode and cathode slurries. Typical challenges associated with using these materials include difficulties obtaining an effective dispersion, and separation of the individual nanotube strands from agglomerated massed CNTs, along with various impurities from nanotube production.

One advantage associated with using the CNT foams disclosed herein versus conventional CNTs is the minimization of the van der Waals forces between individual CNT elements - the forces infamously known for causing agglomeration and bundling of CNTs. This allows for submicron-scaled spacing for active battery material loading, and maximization of the accessible surface area for energy storage. With a 3-dimensional CNT foam structure, any processing steps traditionally needed to disperse CNTs can be avoided. Instead, the active material can be impregnated/infiltrated into the foam.

Using a 3-dimensional foam structure of CNTs as a starting material, the active materials become the additives, whereas conventional CNTs are merely used as additives in the active battery materials, typically via dispersion in slurries. The 3-dimensinoal CNT foam structure changes the process of how batteries are built, relative to where conventional CNTs are used.

Another significant benefit of the CNT foam material is that it provides the structure for developing a full electrode. An electrode made with the CNT foam can be flexible, will be the conductive current collector, and will provide structure and support for embedded active materials. This added structural support improves the long-term reliability and life of cells produced with this novel foam substrate. The structure allows freedom in creating different form factors for electrodes and cells as well, having removed the constraints associated with 2 dimensional traditional current collectors.

The CNT foam is a flexible, yet well-defined structure, minimally impacted by external chemistry and mechanical stresses, i.e. they retain their spacing but are flexible. Conventional CNTs can be dispersed or separated into single or multiple strands depending on the energy input and chemical environment. Conversely, CNT Foams retain a well-defined structure, minimally impacted by physical treatment, including dispersion in electrode slurries for lithium ion batteries. In other words the CNT powder material will improve electrical performance and adhesion of electrodes made with the additive, but the CNT foam will provide a completely new structure for electrodes and cells to be produced that will not only provide structural support but a network of highly conductive CNT's in an integrated structure. The resulting 3 dimensional electrode structure will not only improve the mechanical integrity of electrodes and cells, but also can dramatically boost power and energy density capabilities of cells made using the foams.

Another aspect to be considered specifically is the 3-D structure of the CNT foam materials is the CNTs can be doped with various heteroatoms (e.g. boron, nitrogen, sulfur, phosphorous etc.), and these heteroatom dopant sites on the CNTs can show a stronger affinity to ions for enhanced energy storage.

Methods for Forming CNT Foam Materials

The synthesis of three dimensional CNT foam materials is disclosed in U.S. Serial No. 13/424,185, and not repeated in significant detail here. However, the following are representative methods for forming CNT foam materials.

CNT Foam Production

General nanotube production process involves a gas-phase or gas-solid phase reactions, preferably chemical vapor deposition, where a hydrocarbon and a boron source are used, along with a metal catalyst, which can be a transition metal complex, and which, in one embodiment, is an iron-containing catalyst. Reaction conditions can vary, but common conditions are in the 700 to 800°C range. To provide a three dimensional structure rather than individual nanotubes, as disclosed in U.S. Serial No. 13/424,185, it is important during chemical vapor deposition reactions that the reactants, namely, one or more hydrocarbons, boron sources, and metal catalyst sources in the chemical vapor deposition reactor are kept in a particular ratio, such that the ratio of the metal atoms to the boron atoms present in the reactor is between 2 and 20, for example, between 4 and 6.

Using this ratio of hydrocarbon, boron, and metal catalyst, it is possible to form a highly porous, three dimensional network of boron-doped carbon nanotubes, which are electrically conductive, and offer excellent physical and chemical properties.

In one embodiment, the ratio of the metal atoms to the boron atoms present in the reactor is between 4 and 6.

Representative boron sources include organoboranes, organoborates, and combinations thereof.

In one embodiment, the carbon source comprises toluene or hexane, the metal catalyst source comprises ferrocene, and/or the boron source comprises triethylborane. In another embodiment, the boron source is the boron containing gas source, boron trichloride.

In one embodiment, the hydrocarbon, the boron source, and the metal catalyst source are combined to form a chemical precursor within the reactor.

In one embodiment, the hydrocarbon is between about 87 wt % and about 97 wt % of the hydrocarbon, the metal catalyst source, and the boron source in the reactor. In another embodiment, the metal catalyst source is between about 2.5 wt % and about 12 wt % of the hydrocarbon, the metal catalyst source, and the boron source in the reactor. In still a third embodiment, the boron source is between about 0.1 wt % and about 2 wt % of the hydrocarbon, the metal catalyst source, and the boron source in the reactor. Any combination of these preferred amounts can be used.

In some embodiments, the three-dimensional carbon nanotube structures comprising boron-containing carbon nanotubes exhibit elastic mechanical behavior.

In some embodiments, the three-dimensional carbon nanotube structures comprising boron-containing carbon nanotubes exhibit magnetic properties with a high coercive field of about 400 Oersted.

In some embodiments, the three-dimensional carbon nanotube structures comprising boron-containing carbon nanotubes are porous solids.

After the foam material is formed, the process comprises the further step of welding the boron-containing carbon nanotubes of the three-dimensional macroscale carbon nanotube structures.

When the pores are partially filled with lithium metal (anode) or lithium salts (cathode), the electrodes have longer useful lifetimes, before dendrite formation, than conventional lithium batteries.

In some embodiments, the electrical capacity significantly exceeds that of conventional lithium batteries.

In some embodiments, electrodes produced using the CNT foam material greatly enhance the electrode's power density and final capacitor components resulting from embedding active materials into the foam structure. A capacitor having a submicron-scale, three-dimensional porous conductive foam structure as an anode, separated from the counter electrode material, that fills all or part of the void space of the porous foam structure, can significantly increase the power density of the final energy storage devices.

The feedstock can vary dramatically; however, all include some form of carbon, either as permanent gases such as ethylene, methane, ethane or carbon containing vapors, i.e. commonly referred to as hydrocarbons. Additionally, inert or forming gas compositions of hydrogen, nitrogen or noble gases are included in the gas stream. Heating can be by conventional furnace means with thermal energy coupled to the gas phase by conduction and radiation. By changing the synthesis parameters of temperature, catalyst concentration, gas flow rates etc. one can tailor the CNT foam density, porosity and pore size. These conditions can be tailored specifically for ideal properties to incorporate the aforementioned battery active materials. Furthermore, there may be additional chemicals to the synthesis reaction meant to include the active battery materials in-situ during the growth process of the CNT foams in the reaction. Any of the aforementioned battery components may be included in the reaction to accomplish the successful incorporation of the battery active materials within the CNT foam structure.

These methods can be used to form three-dimensional carbon nanotube structures comprising boron-containing carbon nanotubes, which form a sponge-like macroscale three-dimensional material of entangled carbon nanotube networks. In aspects of this embodiment, the three-dimensional carbon nanotube structures comprising boron-containing carbon nanotubes form a macroscale three-dimensional structure of nanotubes wherein the macrostructure is at least 1 cm in two perpendicular directions, or at least 1 cm in three orthogonal directions.

The three-dimensional carbon nanotube structures comprising boron-containing carbon nanotubes formed using this method are porous materials which, in some embodiments, have a bulk density less than 10 mg/cm$^3$, and in other embodiments, a bulk density between 10 mg/cm$^3$ and 29 mg/cm$^3$.

In some embodiments, the three-dimensional carbon nanotube structures comprising boron-containing carbon nanotubes comprise an isotropic ensemble of entangled individual carbon nanotubes comprising elbow defects or covalent junction sites, and in other embodiments, the isotropic ensemble of entangled individual carbon nanotubes does not comprise elbow defects or covalent junction sites.

Ideally, in addition to low density and high porosity, the three-dimensional carbon nanotube structures comprising boron-containing carbon nanotubes exhibit elastic mechanical behavior.

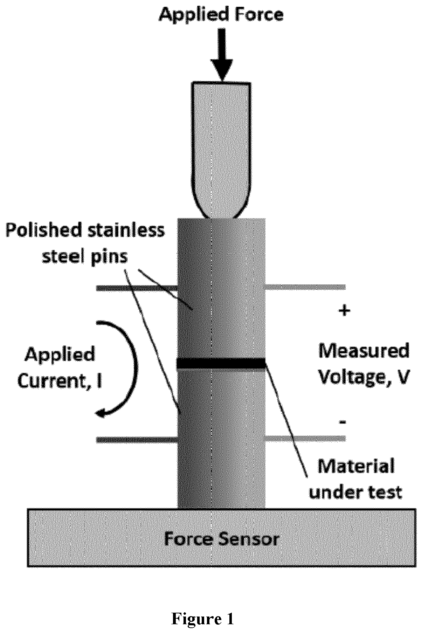

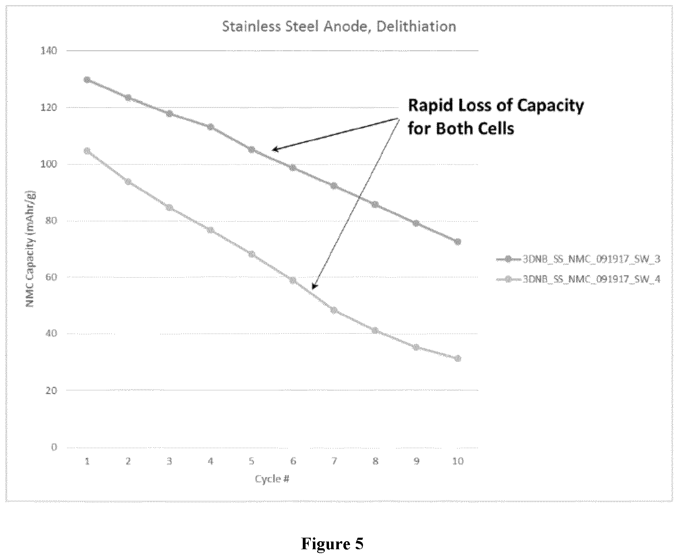

Ideally, the nanotube structures are highly porous. As shown in Figures 1D and 5A-H of U.S. Serial No. 13/424,185, boron induces atomic-scale "elbow" junctions, and forms a three dimensional material with high porosity. In some embodiments, using the processes described in the application, a macroporous material with pore diameters >50 nm was provided. Based on the assumption that the density of individual MWCNTs to be around 2.1 g/cm, materials formed using these methods which have a density <19 mg/cm$^3$ have a porosity >99% (thus meaning that 99% of the volume is air). A BET surface area measurement further characterized the material as well, and in some embodiments, the BET surface area was found to between 103.24 m$^2$/g and 360.42 m$^2$/g, which is a relatively low density, which correlates to a high porosity.

The incorporation of active materials into the 3D CNT foam structure, which is discussed in more detail below, makes them extremely electrically conductive materials, with a high surface area and a controlled resistivity.

The first stage of a charge is conventional lithium intercalation into graphitic carbon structure, i.e. CNT foams. The second stage of charge is plating lithium metal onto outside of high surface area CNT foams.

The 3D CNT foam structure provides the right mix of properties for improving the performance of rechargeable batteries, including lithium batteries:

Chemical compatibility with Li ion electrochemistry

High surface area

Interconnected 3D structure

Controlled resistivity

In conventional cells, lithium metal dendrites puncture the separator and cause catastrophic short circuits, but the 3D CNT Foam structures described herein suppress dendrite formation and encapsulate Li metal to protect the separator from puncture.

**II. Anodes and Cathodes**

Electrodes are electrical conductors that are connected to something that is not a metal. The cathode type of electrode delivers electrons (negative charge) and the anode collects electrons (and has a positive charge).

An electrode through which electrons flow out of the device is termed an anode because it is positively charged. An anode is a negative electrode on a battery and a positive electrode on an electrolytic cell.

A cathode is a positive electrode on a battery and a negative electrode on an electrolytic cell.

Electric current is perceived as flowing in the opposite direction that the electrons are flowing. Electrons go into the + terminal of a battery, but electric current goes out. Electrons go into the - terminal of an electrolytic cell, but electric current goes out.

The electrodes include active materials, which include cathode active materials and anode active materials, and may be selected on the basis of compatibility of a combination thereof known in the art with the selected electrolyte.

The anode active material is typically a metal, either in elemental form, as metal, or in a bonded form, as an ion.

The cathode material or active mass is a metal salt, typically a metal oxide, such as lithium oxide, which in the discharged state of the battery contains lithium bonded to its structure.

In one embodiment, the active materials are used in the form of a suspension of nanoparticles having an average particle size (e.g., diameter) in a range of from about 10 nm to about 1000 nm, but may not be limited thereto, and some of these materials are commercially available in a proper size range.

In one embodiment, one or more of the anode and cathode includes an active material present in a CNT foam material as described herein. In one aspect of this embodiment, the anode or cathode active material are suitable for an energy storage device, such as a lithium ion battery.

In one embodiment, the anode includes a current collector.

In one aspect of this embodiment, a layer of negative active material is disposed on the current collector. The negative active material layer may include a negative active material and a binder. The negative active material can be a material that reversibly intercalates/deintercalates lithium ions, lithium metal, a lithium metal alloy, a material capable of doping and dedoping lithium, or a transition metal oxide.

A material that reversibly intercalates/deintercalates lithium ions can be, for example, a carbon material that may be any suitable carbon-based negative active material available for a rechargeable lithium battery, and examples thereof may include crystalline carbon, amorphous carbon, or a combination thereof. The crystalline carbon may be non-shaped (e.g., amorphous), or may be sheet, flake, spherical, or fiber shaped natural graphite or artificial graphite and the amorphous carbon may be soft carbon or hard carbon, a mesophase pitch carbonized product, fired cokes, and the like.

A material capable of doping and dedoping lithium can be, for example, Si, $SiO_x$ (0<x<2), a Si-C composite, a Si-Q alloy (wherein Q is an alkali metal, an alkaline-earth metal, Group 13 to Group 16 elements, a transition metal, a rare earth element or a combination thereof, and not Si), Sn, $SnO_2$, a Sn-C composite, Sn-R (wherein R is an alkali metal, an alkaline-earth metal, Group 13 to Group 16 elements, a transition metal, a rare earth element or a combination thereof, and not Sn), or the like. At least one of these materials can be mixed with $SiO_2$. The elements Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof.

The transition metal oxide may be vanadium oxide, lithium vanadium oxide, or the like.

In one aspect of this embodiment, the current collector is a metal foil. Representative metal foils include copper foil, nickel foil, stainless steel foil, titanium foil, nickel foam, copper foam, a polymer substrate coated with a conductive metal, and combinations thereof.

Lithium is the common denominator for all parts of lithium batteries, and all stages of the battery reactions in lithium batteries. It is present in the anode material when the battery is charged, during the discharge it carries ionic charge through the electrolyte in form of Li+- ions, and it bonds to the structure of the cathode in the discharged form. Sometimes, this process is called intercalation of lithium. It can be envisioned that both anode and cathode materials serve as hosts or substrates for lithium as it shuttles from one electrode to another. Sometimes this mechanism is called a "rocking chair" as lithium "rocks" between the substrates.

In lithium batteries, the anode always contains lithium, either in elemental form, as metal, or in a bonded form, as an ion.

When lithium is in an ionic form, it bonds with various support materials, such as graphite, soft carbon, hard carbon, silicon or titanium, among others, so as used herein, it can bond to the carbon in the CNT foam materials.

The lithium metal alloy can also be present as an alloy of lithium and a metal selected from Na, K, Rb, Cs, Fr, Be, Mg, Ca, Sr, Si, Sb, Pb, In, Zn, Ba, Ra, Ge, Al, and Sn.

The nature of these materials and the way lithium bonds to their structure determines the elements of the performance.

Any lithium salt can be used, without particular limitations, as long as it is capable of supplying lithium ions to be used in the lithium ion battery. Representative lithium salts include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)2$, $LiN(C_2F_5SO_2)_2$, $LiN(CF_3SO_2)_2$, LiCl, LiI, or $LiB(C_2O_4)_2$.

A lithium ion hybrid capacitor can include a member selected from the group consisting of $LiCoO_2$, $LiMn_2O_4$, $LiFePO_4$, $Li_{1-x}Fe_xPO_4$ (0≤x≤1), $Li[Mn_{2-x}M_x]O_4$ (M=Co, Ni, Cr, Al, Mg, 0≤x≤0.1), $Li_aCoM_aO_2$, $Li_{1-b}CoM'_yO_2$ (M and M' represent W, Mo, Zr, Ti, Mg, Ta, Al, Fe, V, Cr, and/or Nb; 1≤a≤1.2, 0<b≤0.05, 0≤x≤0.02 and 0≤y≤0.02), $LiNiO_2$, $LiNiMnCoO_2$, $Li_2FePO_4F$, $LiCo_{0.33}Ni_{0.33}Mn_{0.33}O_2$, $Li(Li_aNi_xMn_yCo_z)O_2$ (also known as NMC), $LiNiCoAlO_2$, $Li_4Ti_5O_{12}$, $Li_3V_2(PO_4)_3$, and combinations thereof, but may not be limited thereto.

The following are the most commonly used types of cathodes in lithium batteries: lithium cobalt oxide (LCO), lithium manganese oxide (LMO), lithium nickel manganese cobalt (NMC), lithium iron phosphate (LFP), lithium nickel cobalt aluminum oxide NCA), and lithium air.

## III. CNT Foams Grown on Active Material Structures

CNT Foams can either be grown directly on copper foil, aluminum foil, or other conductive metal foils, or pre-deposited prior to electrode coat, which can significantly improve electrical and/or mechanical contact relative to where the foils are adhered to a preformed CNT foam.

The CNT Foams can be formed into a micron-sized knitted rope, loose, open structure. This involves contacting

5-10 $\mu$m particles with nm sized strands constituting a micro-sized scaffold, providing excellent electrical conductivity throughout the heterogeneous electrode mixture. This embodiment resembles a loose woven knitted yarn. This material has all of the attributes required for fast ionic transfer and high energy density, as active anode and cathode materials can be embedded inside the foam structure.

## IV. Incorporation of Active Materials, including Metals (Anodes) and Metal Ions (Cathodes)

When the active materials are incorporated into the CNT foam materials described herein, they are incorporated either onto or into the foam structures. When incorporated into the foam structures, the active materials penetrate into the pores of the porous structure. Typically, when active materials are incorporated into the pores of the CNT foam material, they are incorporated in a range of between 1 and 99% of the pore volume of the foam structure, more typically between 10 and 90% of the pore volume of the foam structure, and still more typically, between 25 and 75% of the pore volume of the foam structure.

### Coating Active Material *onto or into* CNT Foam Structures

In one embodiment, for the anode and cathode electrodes formed from the CNT foam structures described herein to be active electrically, the ingredients of either or both electrodes can either be placed on top of the current collector, or into the scaffolding directly. This ensures that the active material is intimately contacted to the current collector for the electrode.

Depending on the attributes of the materials and the design of the electrode and cell, a wide variety of options exist for the creation of an electrode using the 3D Foam substrate material. In general, active material can be placed on top of the 3D Foam or embedded into the pores of the 3D Foam materials. This has a number of implications not only for the selection of the raw materials but in the application methods used for inserting the active material into or onto the 3D Foam substrates. In other words the foam pores can be adjusted to meet the needs of the particle sizes of the active ingredients of each electrode to insure that they are able to be embedded into the foam. This can be aided by plating the foam to allow better adhesion of the active materials and to reduce the open CNT material available for building the anode electrodes SEI (solid electrode interface) layer.

There are multiple embodiments for coating 3D Foam substrates with battery active materials:

### Coat on Top of CNT Foam Substrates:

Similar to traditional battery electrode coating operations, it is possible to use a standard doctor blade coating method to apply to active materials to the 3D Foam core material. This includes all forms of conventional coating methods used in the battery industry, such as slot die, reverse roll, comma coat, and the like. Film deposition methods, including both electroless and electroplated methods, as well as vapor deposition methods, can also be used as well.

Depending on the composition and pore size of the CNT Foam substrates, it is possible to coat material inside the CNT Foam matrix using a number of techniques:

Pre-treat the CNT foam using thin layers of metalized materials. This will not only enhance conductivity and adhesion but may reduce first cycle losses significantly for the completed cell.

Inject electrode materials inside the CNT Foam structural matrix. This could be done in many ways, either via a coating process, extrusion, chemical deposition, thin film deposition, pressing, or any number of standard coating methods used today.

### Coat Inside CNT Foam Substrates in Layers:

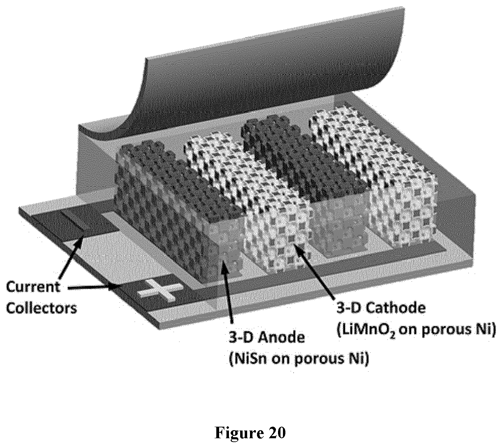

A complete anode/cathode/separator battery cell can be formed within a single continuous or connected CNT Foam substrate. In this embodiment, an anode material, separator and cathode material are injected into the 3D Foam material, and separation occurs between each of the component layers. An example of this is shown in Figure 20.

### Creation of Unique Chemistries, Application Methods, and Construction Techniques

The unique 3D Foam structure and attributes of CNT materials allows for novel chemistries to be applied:

To facilitate the use of nano scale materials, a few atomic layers of Si, Sn, Ge and other elements can be coated onto the CNT foam material. The porosity or open dimension of the CNT Foam structure can be customized to allow inclusion of other compounds, or specific active materials. A dense, interconnected structure can be created to repel all other non-desired species. Foam structures can be optimized for solvents to be able to infiltrate into nano-porous structures.

Solvated polymers can be infiltrated into nano-porous structures in the foam material, as well as solvents and polymers.

Conventional binders can be used to fill all or part of the volume/surface area within the electrodes (such as any volume/surface area remaining after a portion of the pores are filled with a metal (anode) or metal salt (cathode) to maximize energy and power densities. The improved contact to the active materials allows one to reduce binder content, resulting in a direct increase in energy density in the cell.

It is possible to electroplate onto the CNT Foam structure to pretreat the material for reducing first cycle losses and improved electrical conductivity.

Electroless plating and electrochemical plating are options for coating the foam structure, as are gas phase coating, including PVD, CVD, ALD (atomic layer deposition)

Coating CNT Foams onto Active material

Basically, three main types of active materials including graphite, high capacity elements Si, Sn, and the like, intercalation oxides, i.e. LTO. All three can be used as a substrate for CNT formation, or even CNT Foam formation, which can have a significant and positive impact on SEI formation.

The choice of active material can be tuned to have an impact on how the CNTs grow.

CNT Foam Coating on Cathode Materials

The CNT foams are relatively stable when exposed to high temperatures. As such, the CNT foams allow one to form cathode materials that can survive higher temperature conditions.

## V. Batteries Including a 3D Foam Anode and/or Electrode

Batteries, including rechargeable batteries, can be formed which include an anode and/or cathode described herein, which include a CNT foam material, optionally formed on top of a foil layer, where the pores of the foam are partially filled with a metal (anode) or metal salt (cathode).

The key performance attributes of a battery are energy density, power density, cycle life (or number of cycles), safety and cost. The energy density is the amount of energy stored in a battery per unit of its volume, in $Wh/cm^3$, or weight, when it is called the specific energy and expressed in Wh/g. These characteristics predict how long the battery will operate at a certain current.

Power density, per volume or specific power per weight shows the rate of energy discharge or the current that a battery can deliver.

Cycle life is a number of charge-discharge cycles a battery can deliver without significant (typically 20%) loss of capacity. It is a critical characteristic of a battery along with energy and power density.

Battery safety is a characteristic that refers to minimization of the risk factors that lead to increase in battery temperature, breakdown of components, venting of gases, and subsequently fire and explosion. Battery safety is a function of battery chemistry and design of electrodes and other battery components.

Battery cost is another critical factor for the widespread adoption of batteries. The cost of manufacturing batteries can be reduced through the use of less expensive materials, improvement in manufacturing processes, by improving performance, and by increasing the volume of production.

At present, there are no available batteries that successfully solve more than one of these attributes. Typically, if the energy density is good, other attributes, such as safety, life or cost, tend to not be as good. Alternatively, if a battery has good safety characteristics, such safety characteristics come at the cost of lower energy or power density or cycle life.

The core problems responsible for performance losses are related to several fundamental, unwanted reactions in rechargeable batteries, such as lithium batteries. These include lithium dendrite growth, formation of a solid electrolyte interphase, slow lithium ion intercalation and low conductivity of the active mass in the electrode.

Lithium metal dendrite growth on the anode is a serious problem that can lead to an electrical short circuit, temperature increases and explosions or fires. Dendrite growth occurs on the anode during charging, when lithium ions transmitted through the electrolyte from the positive electrode (cathode) fail to incorporate into the host material, and instead get reduced or deposit as lithium metal in form of random, tree-like growth that can extend through the separator to the other electrode, causing an electrical short. Sometimes, the lithium metal dendrites do not reach the opposite electrode, but they have a loose connection to the negative electrode (anode) and can easily detach from the main active mass, leading to loss of capacity. These problems are largely avoided when the lithium metal is encapsulated in the CNT foams described herein.

In one embodiment, a rechargeable battery, such as a lithium battery, includes an electrode assembly including a positive electrode, a negative electrode facing the positive electrode, a separator interposed between the negative electrode and the positive electrode, an electrolyte solution impregnating the positive electrode, the negative electrode, and the separator, a battery case housing the electrode assembly, and a sealing member sealing the battery case.

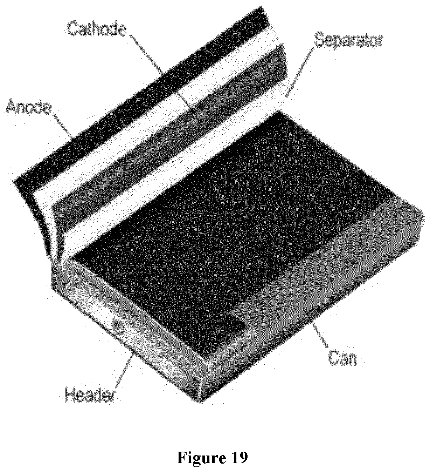

Regardless of the packaging method or form factor, typical batteries are comprised of common elements. For reference, the following are the common components of rechargeable batteries: anode, cathode, separator, housing (also referred to in some embodiments as a "can"), and a header (which is adapted to fit inside a device such that a positive and negative connection complete a circuit). A representative battery is shown in Figure 19.

These components, and their ability to adapt to and benefit from a three dimensional substrate structure, are discussed in detail elsewhere herein.

The key performance attributes of a battery are energy density, power density, cycle life (or number of cycles), safety and cost. The energy density is the amount of energy stored in a battery per unit of its volume, in Wh/cm$^3$, or weight, when it is called the specific energy and expressed in Wh/g. These characteristics predict how long the battery will operate at a certain current.

Power density, per volume or specific power per weight shows the rate of energy discharge or the current that a battery can deliver.

Cycle life is a number of charge-discharge cycles a battery can deliver without significant (typically 20%) loss of capacity. It is a critical characteristic of a battery along with energy and power density.

Batteries are typically marked with nominal voltage; however, the open circuit voltage (OCV) on a fully charged battery is 5-7 percent higher. Chemistry and the number of cells connected in series provide the OCV. The closed circuit voltage (CCV) is the operating voltage. Capacity represents specific energy in ampere-hours (Ah). Ah is the discharge current a battery can deliver over time. Battery chargers have some tolerance as to Ah rating (with same voltage and chemistry); a larger battery will simply take longer to charge than a smaller pack.

Specific power, or gravimetric power density, indicates loading capability. Batteries for power tools are made for high specific power and come with reduced specific energy (capacity).

The C-rate specifies the speed a battery is charged or discharged. At 1C, the battery charges and discharges at a current that is on par with the marked Ah rating. At 0.5C, the current is half and the time is doubled, and at 0.1C the current is one-tenth and the time is 10-fold.

A load defines the current that is drawn from the battery. Internal battery resistance and depleting state-of-charge (SoC) cause the voltage to drop under load, triggering end of discharge. Power relates to current delivery measured in watts (W); energy is the physical work over time measured in watt-hours (Wh).

Battery safety is a characteristic that refers to minimization of the risk factors that lead to increase in battery temperature, breakdown of components, venting of gases, and subsequently fire and explosion. Battery safety is a function of battery chemistry and design of electrodes and other battery components.

Battery cost is another critical factor for the widespread adoption of batteries. The cost of manufacturing batteries can be reduced through the use of less expensive materials, improvement in manufacturing processes, by improving performance, and by increasing the volume of production.

At present, there are no available batteries that successfully solve more than one of these attributes. Typically, if the energy density is good, other attributes, such as safety, life or cost, tend to not be as good. Alternatively, if a battery has good safety characteristics, such safety characteristics come at the cost of lower energy or power density or cycle life.

The core problems responsible for performance losses are related to several fundamental, unwanted reactions in rechargeable batteries, such as lithium batteries. These include lithium dendrite growth, formation of a solid electrolyte interphase, slow lithium ion intercalation and low conductivity of the active mass in the electrode.

Lithium metal dendrite growth on the anode is a serious problem that can lead to an electrical short circuit, temperature increases and explosions or fires. Dendrite growth occurs on the anode during charging, when lithium ions transmitted through the electrolyte from the positive electrode (cathode) fail to incorporate into the host material, and instead get reduced or deposit as lithium metal in form of random, tree-like growth that can extend through the separator to the other electrode, causing an electrical short. Sometimes, the lithium metal dendrites do not reach the opposite electrode, but they have a loose connection to the negative electrode (anode) and can easily detach from the main active mass, leading to loss of capacity.

In one embodiment, a rechargeable battery, such as a lithium battery, includes an electrode assembly including a positive electrode, a negative electrode facing the positive electrode, a separator interposed between the negative electrode and the positive electrode, an electrolyte solution impregnating the positive electrode, the negative electrode, and the separator, a battery case housing the electrode assembly, and a sealing member sealing the battery case. These individual components (other than the anodes/cathodes, which were described above) are discussed in detail below.

**Separators**

In some embodiments, a cathode and/or an anode as described herein are used in an energy storage device, such as a battery. Energy storage devices including one or both of the anode and cathode described herein also typically include an electrolyte and a separator, as well as other components. The electrolyte and the separator may be appropriately selected by those skilled in the art from among those known in the art and may be used without particular limitations.

Separators play a unique and complex role in not only isolating the anode and cathode, but also in allowing ionic transfer between the electrodes via the electrolyte.

Separators not only electrically isolate the anode and cathode and prevent the electrical shorts, but also allow $Li^+$-ion transfer through the electrolyte. Separators often have a safety feature whereby their pore size changes at elevated temperatures, and by preventing further ion transport, shut down the cell. Separators must have chemical stability in the electrolyte, required thickness, pore size, and permeability; they must be permeable for $Li^+$-ions, have mechanical strength and wettability. They also have to be thermally stable and must have the capability to produce a thermal shut-down at required temperature. The most commonly used separators in the lithium ion industry include glass fiber, polypropylene, (PP), polyethylene (P)E, polyamide, nylon and ceramic filled separators.

For example, the separator is a component typically used in a lithium ion battery, a lithium ion hybrid capacitor, and the like and configured to separate the cathode and the anode to suppress an electric contact between the electrodes, and needs to be thin and have high intensity, ion permeability, and current breaking characteristics for stability of the battery. The separator may be located between the anode and the cathode to suppress a short circuit, and any separator typically used in the art can be used without particular limitations. A main material of the separator may be, for example, a PE, PP, PE/PP laminated structure or a PE/PP phase separation structure, but may not be limited thereto. For example, the separator may be a porous polymer membrane which may be provided as a conduit for lithium ions moving back and forth between the electrodes. The cathode, the anode, and the separator may form "a battery stack" together. The battery stack and the electrolyte are airtightly sealed in a metallic battery casing, which enables a contact with an external circuit.

In some embodiments, a separator is impregnated inside a portion of the CNT foam structure in one or both of the anode and cathode, coated onto all or part of one or both of the anode and cathode, or applied to all or part of one or both of the anode and cathode using techniques such as sputtering, evaporation, vacuum fill, and the like.

In other embodiments, conventional separator materials, which are not adhered to, or impregnated within, the CNT foam materials are used.

The separator can include any suitable material known in the art of rechargeable batteries, generally, and lithium batteries, specifically, so long as the separator is capable of separating the negative electrode from the positive electrode, and providing a transporting passage of metal ions, such as lithium ion.

In other words, the separator may have a low resistance to ion transport and an excellent impregnation for electrolyte solution.

Typical separators fall into one of the following six categories, based on their physical and chemical characteristics. These include microporous separators, non-woven materials, ion-exchange membranes, supported liquid membranes, polymer electrolytes, and solid ion conductors.

The most commonly used separators in rechargeable batteries, such as lithium ion rechargeable batteries, include glass fiber, polypropylene (PP), polyethylene (PE), polyamide, nylon and ceramic filled separators. Other materials include polyesters and polytetrafluoroethylene (PTFE), and blends or combinations of these with the other types of separators.

In preferred embodiments, a polyolefin-based polymer separator such as polyethylene, polypropylene or the like is used, or, in order to ensure the heat resistance or mechanical strength of the separator, a coated separator including a ceramic component or a polymer material is used. In some aspects of these embodiments, the separator has a mono-layered or multi-layered structure.

The separator ideally has suitable properties for use in rechargeable batteries. Examples of such properties are provided below:

Chemical Stability

The separator material must be chemically stable against the electrolyte and electrode materials under the strongly reactive environments when the battery is fully charged. The separator should not degrade. Stability is assessed by use testing.

Thickness

A battery separator must be thin to facilitate the battery's energy and power densities. A separator that is too thin can compromise mechanical strength and safety. Thickness should be uniform to support many charging cycles. $25.4\mu m$-(1.0 mil) is generally the standard width. The thickness of a polymer separator can be measured using the T411 om-83 method developed under the auspices of the Technical Association of the Pulp and Paper Industry.

Porosity

The separator must have sufficient pore density to hold liquid electrolyte that enables ions to move between the electrodes. Excessive porosity hinders the ability of the pores to close, which is vital to allow the separator to shut down an overheated battery. Porosity can be measured using liquid or gas absorption methods according to the American Society for Testing and Materials (ASTM) D-2873. Typically, a Li-ion battery separator provides porosity of 40%.

Pore size

The pore size is ideally smaller than the particle size of the electrode components, including the active materials and conducting additives. Ideally, the pores are uniformly distributed, while also having a tortuous structure. This can help ensure a uniform current distribution throughout the separator while suppressing the growth of Li or other metals, if used, on the anode. The distribution and structure of pores can be analyzed using a Capillary Flow Porometer or a Scanning Electron Microscope.

Permeability

The separator must not significantly limit the battery performance. Polymer separators typically increase the resistance of the electrolyte by a factor of four to five. The ratio of the resistance of the electrolyte-filled separator to the resistance of the electrolyte alone is called the MacMullin number. Air permeability can be used indirectly to estimate the MacMullin number. Air permeability is expressed in terms of the Gurley value, the time required for a specified amount of air to pass through a specified area of the separator under a specified pressure. The Gurley value reflects the tortuosity of the pores, when the porosity and thickness of the separator is fixed. A separator with uniform porosity is vital to battery life cycle. Deviations from uniform permeability produce uneven current density distribution, which causes the formation of crystals on the anode.

Mechanical strength

Some batteries are prepared using a "winding operation." The separator must be strong enough to withstand the tension of the winding operation during battery assembly. Mechanical strength is typically defined in terms of the tensile strength in both the machine (winding) direction and the transverse direction, in terms of tear resistance and puncture strength. These parameters are defined in terms of Young's modulus.

Wettability

The electrolyte must fill the entire battery assembly, requiring the separator to "wet" easily with the electrolyte. Furthermore, the electrolyte should be able to permanently wet the separator, preserving the cycle life. On information and belief, there is no generally accepted method used to test wettability, other than observation.

Thermal stability

The separator must remain stable over a wide temperature range, ideally without curling or puckering, and, ideally, laying completely or substantially flat.

**Electrolytes**

An electrolyte is a component that facilitates ion exchange between the anode and the cathode, and in recent years, ionic liquid electrolytes or gel polymer electrolytes with low volatility and inflammability have been mainly used, but the electrolyte may not be limited thereto.

The electrolyte amount can be calculated, for example, based on the porosity of the cathode electrode, anode electrode and separator, after active materials are loaded into and/or onto the anode and/or cathode, with some extra volume of electrolyte for filling the container in which the battery is to be encased.

Any electrochemical system (either power supply or electrolysis cell) consists of two interfaces, where the mechanism of conductivity changes, namely: electronic conductor/ionic conductor/electronic conductor. The two electronic conductors are the electrodes, while the ionic conductor is the electrolyte. The two electrodes must avoid electrical contact with one another, to avoid causing a short circuit.

An electrolyte closes the internal electrical circuit of the cell. When the electrodes are placed in an electrolyte and a voltage is applied or generated, the electrolyte will conduct electricity. Hence, it acts as a charge carrier in the internal circuit between the positive and negative electrodes, enabling electrons (i.e., current) to flow through the external circuit.

Ideally, an electrolyte should have a high ionic conductivity, which allows the battery's internal resistance to be minimized, (this is more important for high power density applications); by contrast, its electronic conductivity should be very low (i.e., its electronic resistance high), which minimizes the self-discharge rate of the battery, which translates to long shelf life. It should also not decompose at the voltages of interest, operate across the desired temperature range, and not pose an unacceptable safety risk in the application of interest The rechargeable industry typically uses a number of commercial electrolytes for typical high volume production batteries, however new formulations are being developed to improve performance for specific product attributes (to aid silicon anode cycle life, to improve low and high temperature performance in automotive batteries).

For example, a liquid electrolyte may include $LiPF_6$-EC/DEC, a solid polymer electrolyte may include $LiBF_4$+PEO, a gel polymer electrolyte may include $LiPF_6$-EC/DMC+PVdF-HFP, and an ionic liquid electrolyte may include LiTFSI-EMITFSI, but may not be limited thereto.

In some embodiments, the electrolyte includes an organic solvent and a lithium salt. The organic solvent may be used without particular limitations as long as it acts as a medium in which ions involved in electrochemical reactions of the battery can move.

In some aspects of these embodiments, the organic solvent is an ester-based solvent such as methyl acetate, ethyl acetate, butyrolactone, and caprolactone; ether-based solvent such as dibutyl ether or tetrahydrofuran; ketone-based solvent such as cyclohexanone; aromatic hydrocarbon-based solvent such as benzene and fluorobenzene; carbonate-based solvent such as dimethylcarbonate (DMC), diethylcarbonate (DEC), methylethylcarbonate (MEC), ethylmethylcarbonate (EMC), ethylene carbonate (EC), and propylene carbonate (PC); alcohol-based solvent such as ethyl alcohol and isopropyl alcohol; nitrile such as R-CN (herein, R is a $C_2$ to $C_{20}$ linear, branched, or cyclic hydrocarbon group and may include a double bond direction ring or an ether bond); amide such as dimethyl formamide and the like; dioxolanes such as 1,3-dioxolane and the like; or sulfolane.

Carbonate-based solvents can be preferable, and a mixture of cyclic carbonate (e.g., ethylene carbonate or propylene carbonate) having a high ion conductivity and a high dielectric constant and capable of improving the charge/discharge performance of the battery and a low-viscosity linear carbonate-based compound (e.g., ethylmethylcarbonate, dimethylcarbonate, or diethyl carbonate) is more preferable. In this case, when the cyclic carbonate and the chain carbonate are mixed at a volume ratio of from about 1:1 to about 1:9, the electrolyte shows the excellent performance.

The most commonly used electrolytes, all of which are compatible with the CNT Foam structural materials described herein, include aqueous electrolytes, organic electrolytes, ionic liquids, and solid electrolytes. All electrolytes within these classes can be used in cells produced using the 3D foam substrate structure, include newly developed solid polymer and glass electrolytes. From an application perspective, the following are specific examples of areas where electrolytes and advances in electrolyte formulations are relevant to product performance:

Automotive: Electrolyte adjustments to improve high and low temperature performance are under development as well as to increase cycle life. Safety performance is also very important and solid polymer or gel electrolytes can greatly improve cell safety performance.

Consumer Products: New high energy silicon anodes require additives to reduce degradations associated with silicon materials. There are also significant benefits of reducing safety hazards with new electrolytes additives, formulations and compositions.

Grid Storage: Long life is vital for reducing battery costs for lithium ion batteries to become a viable and low cost solution for grid storage applications. One component of improving cell and battery lifetime is to improve electrolytes.

**Binder**

Important component in the manufacturing of traditional lithium-based batteries is the binder, which serves to improve the improve the mechanical strength of the active mass in electrodes and to improve the conductivity of the electrodes. Binders are high-molecular weight polymers with molecular weights of several hundred thousand to several million grams per mole and with good solubility in the dispersion medium of the slurry. Moreover, binders are surfactants that should assist in homogeneous mixing of the electrode components. Since binders add dead-weight to a battery, their amount should be reduced as much as possible. Until recently binders have been mostly recognized for imparting composites better mechanical properties.

The traditional binder for LIB electrodes is poly(vinylidene difluoride) (PVdF) and copolymers of the vinylidene difluoride (VdF) and hexafluoropropene (HFP) monomers, so-called PVdFHFP (Kynar or KynarFlex), with refined mechanical properties.

There are three established binder alternatives in negative LIB electrodes: cellulose-based polymers, particularly the sodium salt of carboxymethyl cellulose (CMC-Na), poly(acrylic acid) (PAA) and its sodium salt poly(sodium acrylate) (PAA-Na) as well as the latex styrenebutadiene rubber (SBR).

**Other Components**

The batteries described herein typically comprise a case configured such that the battery can be mounted in a suitable housing for a device to be powered by the battery. Those of skill in the art know how to appropriately design a casing for a battery.

A specific battery design builds on the electrode designs that are then combined with specific battery structure parameters, such as electrode area, the number of electrodes, and battery casing.

Electrode level design elements include, for example, for each electrode independent specific capacity of the active material, active material loading, electrode density, additional electrode components and current collector parameters. The electrode designs of the positive electrode and negative electrode interconnect through the selection of the balance and the optional inclusion of supplemental lithium addition.

Once the electrode parameters and balance are selected, the battery design can be selected based on area of electrodes and number of electrode structures to achieve a specific gravimetric energy density and volumetric energy density of a battery as well as the total capacity of the battery.

The battery case can be any of a variety of shapes, e.g., prismatic or cylindrical, and typically defines a volume of between 0.05 cc and 30,000 cc. Batteries within this range typically exhibit capacities between 1.0 milliamp hours and 10,000 amp hours, though the capacities can be enhanced using the anodes and/or cathodes described herein.

Battery casings, also called battery housings, are the shells or walls encasing the functional battery parts and chemicals. Batteries, sometimes referred to as cells, are storage devices for electricity and are classified as "primary" if they are disposable and "secondary" if they are re-chargeable.

Any suitable material can be used to prepare battery casings, but typical materials are polyolefins, such as polypropylene copolymers.

Battery casings are not the same as battery cases. A battery case is designed to contain and protect the casing-enclosed battery. The case can range in size depending on the applications, but are typically between the size of a small suitcase to contain larger, batteries, such as those used in electric cars, to the size of a matchbook for tiny hearing aid cells.

Battery cases may be manufactured from a variety of materials including plastic (copolymeric or not), wood, metal, aluminum, even cloth, leather or cardboard, unlike battery casings, which are typically prepared using durable materials.

The battery compartments and holders for AAA, AA, C, D and 9V sized batteries are relatively standard.

U.S. Patent No. 9,887,403 to Huang discloses thin film encapsulation battery systems, which can be used to form batteries including the 3D foam materials described herein. In stacked battery applications, a number of thin film battery cells are stacked for assembly into the battery system. For example, each stack may include a cathode collector layer adjacent the cathode layer, and adjacent cells can be inverted so that the cathode collector layers are electrically coupled within the battery assembly. Alternatively, bare cathode or anode layers can be stacked adjacent to one another, and a conducting adhesive can be used to form the collector layers.

The battery cells can be encapsulated with a polymer or organic film. Alternatively, a multilayer encapsulation system can be used, with an inner ceramic layer positioned toward the cell stack, an outer polymer layer arranged about the inner ceramic layer, and a metallic layer between the inner ceramic layer and the outer polymer layer.

In battery system applications, a number of thin film battery cells may be arranged in a stacked configuration, where each of the cells includes an anode layer, a cathode layer, and an electrolyte layer between the anode and cathode layers. The encapsulant surrounds the stacked configuration, providing a substantially continuous chemical and mechanical barrier about the thin film battery cells.

Suitable encapsulants can be formed of organic liquid and polymer materials. A three-layer encapsulation system can also be used, with an inner ceramic layer, an outer polymer layer, and a metallic layer in between. In some designs, a space or gap is left between the encapsulant and the stacked thin film cell configuration, in order to accommodate thermal expansion and contraction, or the stack of battery cells can be formed with slanted or nonparallel opposing sides, to allow for relative movement.

These battery systems can be utilized in electronic devices, for example a smartphone, tablet computer, or other mobile device. In these applications, the battery assembly is typically coupled to a controller, and configured to power a display. The assembly itself includes a number of thin film battery cells arranged in a stacked configuration, where each of the thin film battery cells has an anode, cathode, and electrolyte layer. The encapsulant can be disposed about the stacked configuration of cells, to provide a chemical and mechanical barrier for the battery cells.

Headers

The battery casing includes a header which allows one to connect the battery to a device to be powered by the battery. Batteries include positively and negatively charged electrodes, and it is important to connect these to the device in the proper manner so that electric current flows from the battery to the device.

Cylindrical batteries, such as A, AA, and AAA batteries, include a flat end and an end with a raised nipple, to distinguish between the positive and negative ends. Flat batteries typically include connectors for connection with a device into which they are inserted, and one way to ensure that the batteries are not incorrectly inserted is to design them such that they only fit in the device when the battery is in the correct orientation (i.e., positive and negative electrodes aligned so as to complete the circuit with the device into which they are inserted).

Holders

A battery holder is one or more compartments or chambers for holding a battery. For dry cells, the holder must also make electrical contact with the battery terminals. For wet cells, cables are often connected to the battery terminals, as is found in automobiles or emergency lighting equipment.

In some embodiments, the battery holder is either a plastic case with the shape of the housing molded as a compartment or compartments that accepts a battery or batteries, or a separate plastic holder that is mounted with screws, eyelets, glue, double-sided tape, or other means. Battery holders can have a lid to retain and protect the batteries, or may be sealed to prevent damage to circuitry and components from battery leakage. Coiled spring wire or flat tabs that press against the battery terminals are the two most common methods of making the electrical connection inside a holder. External connections on battery holders are usually made by contacts with pins, surface mount feet, solder lugs, or wire leads.

The battery holder is typically designed using knowledge of how and where the larger product will be used. Human factors to be considered include ease of battery exchange, age range and physical condition of the intended user. A designer can select between a battery holder molded into the product case or made as a separate part. For many products, regulations and product safety standards affect the battery holder selection.

Typical battery holders are made with polypropylene or nylon bodies rated for 80-100 °C. Lithium coin cell holders are made with high temperature polybutylene terephthalate (PBT), nylon or liquid crystal polymer (LCP) bodies because they normally are circuit board mounted and require wave soldering at 180-240 °C or reflow soldering at 260-300 °C.

Battery contacts can be one of the most important parts of the design. In those embodiments where the batteries are nickel-plated, it can be preferred that the contacts be nickel-plated to prevent galvanic corrosion between dissimilar metals. Battery contacts can be fixed contacts, flexible contacts, or some combination of the two.

Fixed contacts are relatively inexpensive but prone to loss of electrical connection. Combination of fixed and flexible contacts are a better solution, but this is subject to an open circuit upon movement in the direction away from the fixed position; the spring contact compresses and allows the battery to move away from the fixed contact. A flexible contact allows for slight expansion of the cell on discharge, as internal chemicals increase in volume. Flexible contacts with multiple fingers touching the anode and cathode allow for movement in multiple directions without losing electrical connection.

Features like polarity, or reverse battery, protection can be part of the design. The contact for the anode side can be recessed behind plastic and receive a battery nub common on Alkaline batteries. Another method is a plastic channel to receive a battery post or terminal. U.S. Publication No. 2007/0275299 A1 discloses polarity protection in which a battery can be inserted into a battery holder in either orientation and still operate properly.

Battery types such as the 9-volt have snap-on contacts.

Where the battery is expected to last over the life of the product, no holder is necessary, and a tab welded to the battery terminals can be directly soldered to a printed circuit board.

## VI. Devices Which Use the Batteries Described Herein

The batteries described herein can be appropriately sized and configured for use in a variety of applications for which rechargeable batteries are used. Non-limiting examples include, but are not limited to, cellular telephones, two-way radios and other communication devices, laptop computers and tablets, wearable electronics, GPS devices, medical devices, including implantable medical devices, and aftermarket electronics.

In certain embodiments, the batteries are used to provide commercial and/or residential energy storage, as back up batteries, "battery sticks," and rechargeable consumer batteries, including batteries of conventional sizes such as A, AA, AAA, C, D, 9 Volt, and the like.

In some aspects, the batteries are used to store power in energy grids, for example, solar power can be stored for use in the evening when solar energy is not generated.

Another use for the batteries is in power tools, including drills, saws, and the like.

Still other applications include vehicles, including cars, trucks, fork lifts, buses, golf carts, electric bikes, electric scooters, electric motorcycles, Segways, hoverboards, and airplanes, including drones. Another application is in starter batteries.

Other applications include military applications, including space applications, missiles, and equipment used by soldiers, including exoskeletons configured to assist soldiers in carrying loads.

The batteries can also be used in mining and drilling operations, and to power robots.

Those of skill in the art know the appropriate power requirements for these devices, and can design appropriate batteries. For example, to assist with battery design, calculations can be performed to estimate overall battery performance from the battery design parameters to guide manufacturing. The capacity of the designed battery can be calculated, for example, by multiplying the total number of positive electrode layers in the battery by the capacity of each positive electrode layer. The number of positive electrode layers can be fixed depending on the capacity requirements for the battery.

Calculations can be performed based on the area of the electrodes and number of electrode layers in a battery stack. Based on these calculations, some indication is provided regarding the overall ranges of battery performance that can be achieved for the high capacity active materials, electrode designs and battery structures described herein. A person of ordinary skill in the art can extrapolate the particular calculation examples to evaluate the broader range of performance, based upon the teachings herein, and can determine an appropriate casing for the batteries.

In one embodiment, a battery is taken to be balanced such that there is anode excess balance at any rate from C/20 to 2 C rate, and to contain supplemental lithium in an amount equal to 100% of the first cycle irreversible capacity loss of the anode.

## II. Capacitors

In addition to using the CNT foam in batteries, these materials also have similar uses and benefits in capacitors and ultracapacitors. Representative capacitors in which the CNF foam materials can be used include ceramic capacitors, which have a ceramic dielectric, film and paper capacitors, named for their dielectrics, aluminum, tantalum and niobium electrolytic capacitors, each named after the material used as the anode and the construction of the cathode (electrolyte), and polymer capacitors (typically aluminum, tantalum or niobium electrolytic capacitors with a conductive polymer as the electrolyte).

Supercapacitors include double-layer capacitors (named for the physical phenomenon of the Helmholtz double-layer), pseudocapacitors (named for their ability to store electric energy electro-chemically with reversible faradaic charge-transfer), hybrid capacitors, which combine double-layer and pseudocapacitors to increase power density, and silver mica, glass, silicon, air-gap and vacuum capacitors, each named for their dielectric.

In addition to the above capacitor types, there are many individual capacitors that have been named based on their application. They include power capacitors, motor capacitors, DC-link capacitors, suppression capacitors, audio crossover capacitors, lighting ballast capacitors, snubber capacitors, coupling, decoupling or bypassing capacitors.

Note that the basic strategy and approach for using CNT foam described for use in batteries applies to capacitors as well, and includes the following embodiments.

In one embodiment, the capacitor is a solid state capacitor comprising at least one electrode which includes a CNT foam, and a solid-state electrolyte separating the two electrodes. The CNT foam improves electrical conductivity and overall power handling performance of capacitors produced with this material, relative to those produced using conventional materials.

Electrodes can be produced using the CNT foam material to greatly enhance power density for the electrodes, as well as the final capacitor component resulting from embedding active material into the foam structure. A capacitor having a submicron-scale, three-dimensional porous conductive foam structure as an anode, separated from the counter electrode material that fills the void space of the porous foam structure which will significantly increase power density of the final devices.

In one embodiment, the invention relates to a capacitor which comprises a combination of elements, including a three-dimensional conducting porous foam current collector forming a porous anode, and a solid-state or conventional electrolyte and film-based or coatable separator material. Similar to the rechargeable battery, the three dimensional nature of the sponge integrates the electrodes, electrolyte and separator into a final package that can be conformably and hermetically sealed for final industrial use.

The capacitors described herein can be used in a wide variety of applications, including automotive, consumer products, grid storage, medical and power tool applications.

The CNT foam material, when used as one or both electrodes in a capacitor, has a high degree of compatibility with conventional capacitor chemistries and materials.

The present invention will be better understood with reference to the following non-limiting examples.

**Example 1: Evaluation/Comparison of Anode Performance Between Stainless Steel and 3D Foam Anodes**

**Development Rationale**

The following examples was carried out on a three dimensional nanotube material prepared according to the teachings of U.S. Serial No. 13/424,185.

The "Holy Grail" of the lithium battery industry is to create a practical lithium "metal" battery. Lithium metal has the highest energy density of any anode for both volumetric and gravimetric energy densities. Graphite as an anode material has -360 mAhr/g energy capacity. Lithium metal has an energy density of 3860 mAhr/g. This is not a 10-fold increase in the **battery** performance, rather a 10-fold increase in the **anode** performance. Since the anode is 30-50% of a cell volume/mass, the increase in battery performance is more in line with a 2- or 3-fold increase in battery performance, which represents a significant improvement in battery performance.

The goal is to construct a lithium metal battery structure with the 3D-CNT Foam and evaluate what performance benefits it can achieve. While not wishing to be bound to a particular theory, the unique 3D structure along with the CNT backbone construction provides a stable platform on which to plate Li on, and in, as the anode (the definition of a lithium metal battery) and then reliably cycle this lithium back and forth between the cathode and anode with minimal losses.

To evaluate the performance enhancements with 3D CNT Foam, we first needed to establish "normal" or baseline performance without 3D CNT Foam, i.e. a stainless steel anode. Any difference in performance will be due to the influence of the 3D CNT Foam.

As discussed below, the experimental data includes an evaluation of both the Baseline Lithium Metal Battery and the 3D CNT Lithium Metal Battery configurations, with very positive results.

The thickness of the CNT foam samples was greater than 1 mm, whereas conventional LIB anodes or cathodes are typically less than 100 $\mu$m, with the necessity to minimize ionic conductivity (mass transport) losses.

The experiments incorporated knowledge from previous unpublished CNT experiments which demonstrated a high irreversible capacity loss (ICL) when used as in an anode formulation.

The primary objective of these investigations was to determine if the 3D CNT structure can be used as a protective anode in a lithium metal battery configuration. By showing that this is possible, potential advantages over conventional lithium metal batteries include:

1. Reduced sample requirements compared to a conventional mix and coat option,

2. CNT sample compression (thickness) can be controlled,

3. Substantially improved lithium battery performance (Wh/L and Wh/kg), obtained by allowing lithium metal to plate on or react with CNTs, eliminating the need for a graphite anode, and

4. Reduced dendrite formation in lithium metal cells

**Bulk Resistivity and Area Specific Impedance**

Bulk resistivity measurements were conducted on a raw, unaltered CNT sample. The sample was randomly selected from previously prepared materials. Since the bulk resistivity measurement involves significant sample compression, the sample materials are not reused.

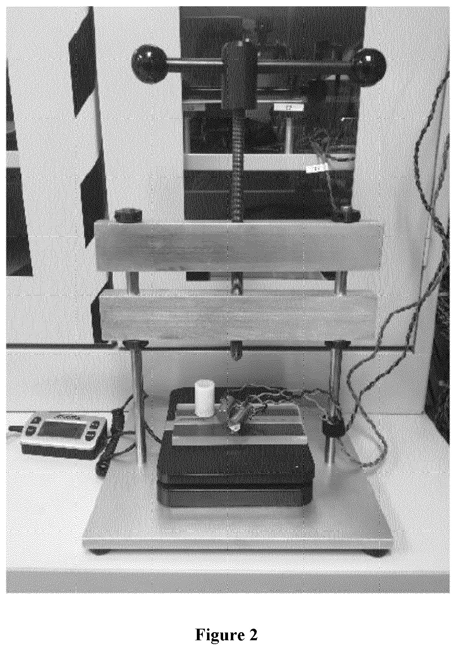

A schematic and photo of the resistivity apparatus is shown below in Figures 1 and 2. A measured mass of sample is inserted between two precision ground stainless steel pins (5/8" diameter). Pressure is applied by a precision screw press apparatus, where compression force is measured by a force sensor with 1 g resolution. A known current is applied and the resultant voltage drop is measured by a battery test system (BTS).

Results using the carbon nanotube foam material described herein are shown in Table 1 below:

Table 1. 3DCM Sample

| Sample | 3DCNT | |
|---|---|---|
| Sample Mass | 384 | mg |
| Sample Area | 1.97 | cm2 |

(continued)

| Sample Thickness | Applied Mass | Resistance | Resistivity | Conductivity | ASI |
|---|---|---|---|---|---|
| cm | kg | Ohms | ohm-cm | S/cm | ohm-cm2 |
| 0.121 | 10 | 0.100 | 1.62 | 0.62 | 0.197 |
| 0.055 | 25 | 0.052 | 1.87 | 0.53 | 0.103 |
| 0.037 | 50 | 0.031 | 1.65 | 0.61 | 0.061 |
| 0.006 | 100 | 0.010 | 3.15 | 0.32 | 0.019 |

Sample resistance, R, is calculated by rearrangement of Ohm's law

$$R = V / I$$

Where R is sample resistance in Ohms, I is the applied current in amps, and V is the measured voltage drop across the sample in Volts.

Sample resistivity, p, is calculated as

$$\rho = R * A / L$$

Where L is the thickness of the sample in units of cm, and A is the sample area in units of cm2.

Resistance is measured at several different compression forces and sample thickness is measured to calculate resistivity, which can then be scaled by area and sample thickness to predict sample resistance for other geometries. The highest compression (100 kg) resistivity is higher than lower compression force, and is likely due to measurement precision for highly compressed samples.

Comparatively, the 3DCNTs show higher resistivity at 1-2 ohm-cm compared to carbon black (C65 by Imerys) at 0.1-0.2 ohm-cm at 100 kg/cm2 compression force. Even though the electrical performance of this particular batch of 3DCNTs is not as good as commercial carbon blacks, it is still a good candidate for a conductive aid in cathode and anode LIB work due to its unique 3D structure.

Review of academic literature reports higher resistivity of 3D CNTs could be due structural defects introduced by bromine to create the inter-connected 3D structure. Confirmation of this theory and/or optimization of CNT production could be the subject of continued CNT development.

**Cell Construction**

Since the 3D nature of CNTs under test is new, two initial tests were conducted to establish a baseline of lithium plating on stainless steel anode and to introduce 3DCNTs as an anode material on a stainless steel substrate.

5/8" 3DCNT samples were punched from foam samples, labeled 01/16/13 Run1 CBx MWNT Sponge. The CNT sample and cell components, including an NMC cathode at 120 g/m2 loading were dried in a vacuum for 22 hrs at 60 Celsius. Four replicate cells were filled with LP-57 electrolyte in a dry glove box and then sealed for electrochemical testing. The cells were tested for 10 charge/discharge cycles with the voltage range of 3-4.3 V using constant current condition of 0.353 mA, which corresponds to a C/10 rate using the cathode capacity of 3.5 mAhr. All cells were tested at room temperature 19+1 Celsius.

Understanding the performance of the 3DCNTs in the context of a lithium ion battery is particularly difficult, as the 3D structure and elemental structure of the CNTs are unique, requiring a deeper understanding of inter-related battery criteria. The following discussion is intended to highlight most, but not all, of the considerations for lithium ion battery development with 3DCNTs.

**Lithium Plating on SS Anode**

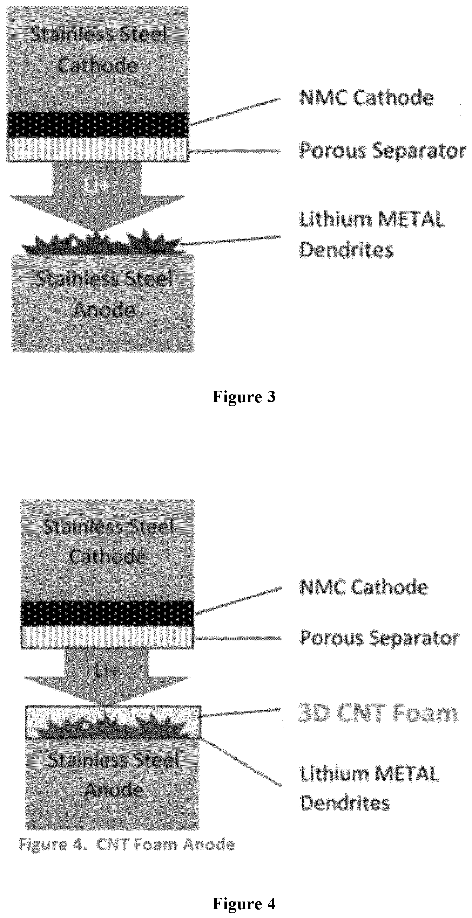

Figure 3 shows the setup for the first half of the experiment, where a NMC111 cathode is used as the source of Li+ ions that are released from the cathode during charge, passing through the porous separator, and then plate on the SS anode current collector. In the actual cell, the separator and Stainless Steel Anode are in full contact, with $LiPF_6$ electrolyte in EC:EMC solvent mix, wetting all of the cell components. As the cell is charged, the lithium ions are plated on the SS Anode current collector.

While the configuration shown in Figure 3 provides the highest energy density possible for a lithium battery (the lithium metal becomes the anode); however, the downside to this approach is lithium metal plates on any conductor in the form of dendrites (needles) that result in two detrimental situations.

The high surface area of the lithium metal dendrites react with the electrolyte (LiPF$_6$ + Solvents), oxidizing some of the lithium metal (consuming an electron) and trapping the resulting lithium ion, preventing it to be discharged to the cathode. Each charge cycle consumes more lithium metal, quickly degrading the cell capacity.

The needle-like shape of the lithium dendrites will eventually penetrate thin separator, shorting the cathode directly to the anode, resulting in catastrophic failure (flames). Attempts have been made for +20 years to prevent dendrite formation and/or penetration of a separator in a practical cell, without success.

**Lithium Plating On and In 3D CNT Foam**

The SS anode provides a baseline or reference condition to compare subsequent testing of the 3D CNT foam as shown in Figure 4. the addition of the 3D CNT foam provides several potential benefits:

1. The CNTs have an intrinsic capacity that can be utilized

2. The CNTs provide a high surface area to anchor Li metal that will reduce the rate of dendrite growth, as well as provide a structure to allow plating and de-plating of lithium metal with lower SEI losses.

3. The 3D structure of the CNT foam has the potential to "encapsulate" the dendrites to shield the separator from direct dendrite contact.

**Experimental Results**

Table 2 shows the high level view of the cell performance. Cell#1 was intended for autopsy in a fully charged state, so it did not undergo cycling beyond the first charge. Cell#2 failed to charge normally. The cause of the failure is not known. As a reference point, the cathode capacity for the first lithiation was nominally 172 mAhr/g, where cells 1, 3, and 4 were within normal variation. The first delithiation of cell should yield 160 mAhr/g capacity for the NMC, but as can be seen, the capacity was somewhat lower.

Table 2. Baseline SS Anode

| | Comments | Cathode Charge Capacity | Cathode Discharge Capacity | First Cycle Irreversible Capacity Loss |
|---|---|---|---|---|
| | | mAhr/g AM | mAhr/g AM | % |
| 3DNB_SS_NMC_ 091917_SW_1 | Autopsy | 170.1 | na | na |
| 3DNB_SS_NMC_ 091917_SW_2 | Failed | 645.4 | na | na |
| 3DNB_SS_NMC_ 091S17_SW_3 | | 177.8 | 129.79 | 27% |
| 3DNB_SS_NMC_ 091917_SW_4 | | 170.1 | 104.74 | 38% |

This additional loss compared to the expected 160 mAhr/g is a result of dendrite formation, which then reacts to form excess SEI around the lithium metal dendrites. This lithium/capacity loss can be seen with further cycling in Table 2. There are multiple ways to improve the capacity retention and slow the decay, but ultimately, the cell will fail in the same way. In these cells, the capacity is severely degraded in only 10 cycles, as shown in Figure 5. Ideally, the cell capacity would remain constant during cycling, but lithium is consumed by SEI formation.

It is useful to point out that the separator used in these experiments is Whatman glass filter fiber, approximately 100 um thick when compressed in the cell. Normally, a cell would use a much thinner separator, i.e. 20 $\mu$m, to minimize cell polarization and increase power performance. In this case we have purposely chosen the thicker Whatman separator to allow us to focus on cell degradation rather than catastrophic failure.

Comparatively, the first charge/discharge performance of the 3D CNT foam is shown below in Table 3. Again, Cell#1 was selected for autopsy and not cycled beyond the first charge. Similar to the Baseline SS Anode, the cathode first charge capacities were very close to the expected value of 172 mAhr/g of NMC. This is to be expected as the first charge capacity really only relates to the cathode as this is the initial source of the Li+ ions.

In contrast to the Baseline SS Anode data, the first cycle loss with the 3D CNT Foam anode are significantly higher at -80% loss. While this is not desirable to have such a high loss, it is also not unexpected as the high surface are of the CNTs consume excess lithium by SEI formation.

The high ICL is an important feature, but subsequent testing will show how to circumvent this result to achieve practical performance enhancements by inclusion of lithium metal on the anode to "pre-lithiate" the anode and eliminate the high ICL.

Table 3. 3D CNT Foam Anode

|  | Comments | Cathode Charge Capacity | Cathode Discharge Capacity | First Cycle Irreversible Capacity Losses | CNT Mass |
|---|---|---|---|---|---|
|  |  | mAhr/g AM | mAhr/g AM | % | g |
| **3DNB_CNT_ NMC_ 091917_SW_1** | Autopsy | 176.3 | 0.0 | na | 0.0041 |
| **3DNB_CNT_ NMC_ 091917_SW_2** |  | 174.3 | 31.8 | 82% | 0.0024 |
| **3DNB_CNT_ NMC_ 091917_SW_3** |  | 181.0 | 41.6 | 77% | 0.0036 |
| **3DNB_CNT_ NMC_ 091917_SW_4** |  | 176.3 | 41.3 | 77% | 0.0039 |

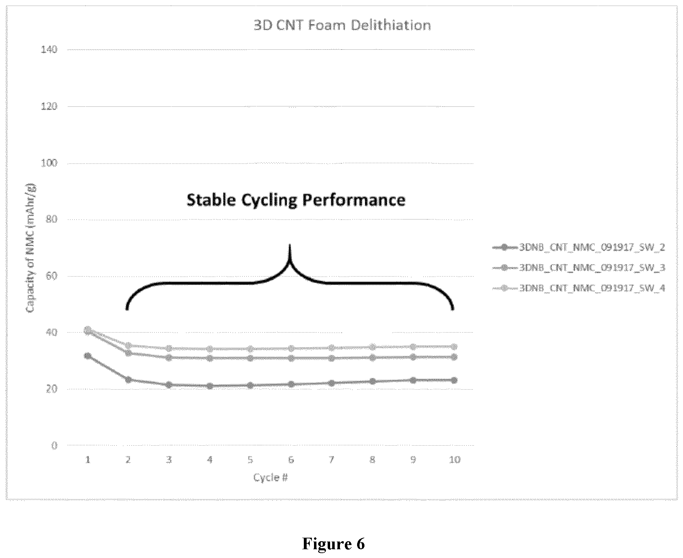

A positive surprise in performance for the 3D CNT Foam can be seen in Figure 6, where the cell capacity was stable over 10 cycles. In contrast, the Baseline SS Anode showed continuous decay over 10 cycles. Both graphs in Figures 5 and 6 are plotted on the same scale to allow easy comparison of capacity retention. It is useful to note that the capacity of the cell is evaluated in terms of the original NMC content and normal capacities; however, it is also possible to view the cell capacity in terms of cyclic capacity assuming the lithium ions are intercalating into the CNTs.

Using an average CNT mass of 4 mg and a cell capacity of 5 mAhr, the cyclic capacity of the CNTs would be 125 mAhr/g, assuming the lithium is actually intercalating into the CNTs. Previous work at Polaris Battery Labs with other CNTs have shown similar capacity. A deeper investigation into the cell behavior will shed some light on the physical behavior, as well as raise additional questions.

**dQ/dV versus V Plots, An Analog for Results Obtainable Using Cyclic Voltammetry**

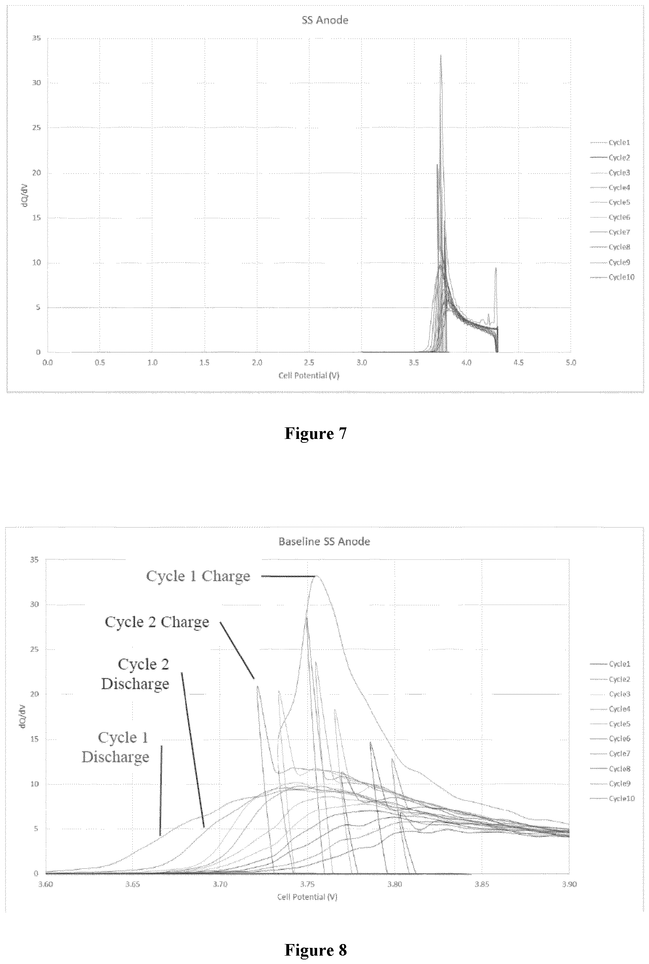

A very powerful method of investigating electrochemical performance is cyclic voltammetry, which measures current flow as a function of a controlled voltage sweep. This method can be approximated using battery testing systems (BTS) to provide a deeper understanding of cell performance. Figure 7 showed a dQ/dV versus V plot for Cell#3 with the Baseline SS Anode configuration for all 10 cycles of charge/discharge. The data is consistent with normal NMC performance, i.e. sudden increase in current flow at 3.7 V corresponding to the $Co^{+3}$ / $Co^{+4}$ redox potential.

Figure 8 shows a close-up view of the redox transition at 3.7 V. The first charge is shown as the blue trace that is peaked. The first discharge is also shown as a blue trace, but is much flatter. Subsequent cycles show the charge curve as the sharp peak and the discharge as the same color, but much broader. Repeated cycling shows an increase in the voltage of the charge peak. The exact interpretation of this feature is not known at this point, but is relatively small, i.e. 10 mV shift per cycle.

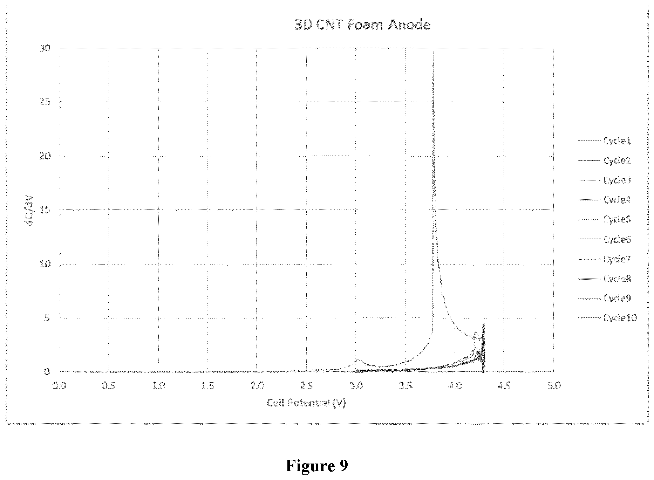

Figure 9 shows the current/voltage performance of the 3D CNT Foam structure as depicted in Figure 4. This data shows very different behavior than the Baseline SS Anode structure.

The first charge shows current peaks at 2.3, 3.0, and 3.8 volts. Since the Baseline SS Anode does not show these peaks, we have to assume these additional peaks are due to lithium interaction with CNTS. In fact, these peaks are representative of the type of performance seen with graphite anodes. It would appear that the 2.3, 3.0, and 3.8 V peaks are intercalation reactions with graphite (CNT), but is somewhat complicated by the NMC voltage overlay with the anode reactions. The first discharge for this cell shows a significantly reduced magnitude (due to lithium trapped at the anode).

The second important feature is subsequent cycles do not show the original 2.3, 3.0, and 3.8 V peaks. In fact, the current peaks shift significantly toward 4.3 volts, which is somewhat confusing in the absence of additional information to guide interpretation.

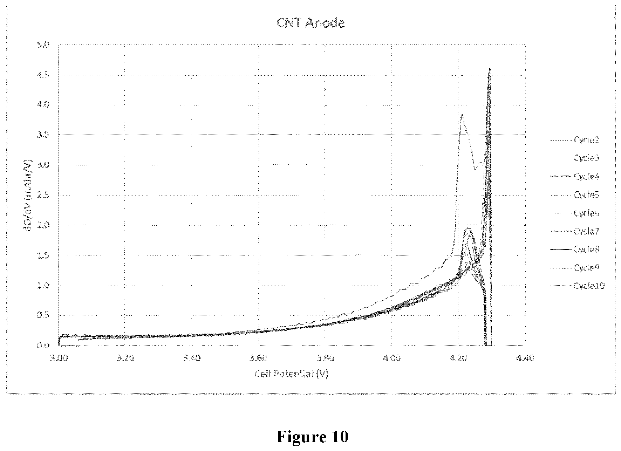

A closer view of the current peaks in the cell cycling range is shown in Figure 10, where there is current flow in the range of 3.0 to 4.2 volts, but a current peak now shows up at 4.25 V and 4.3 V. Additionally, there is a voltage offset for charge and discharge peaks, due to activation energy.

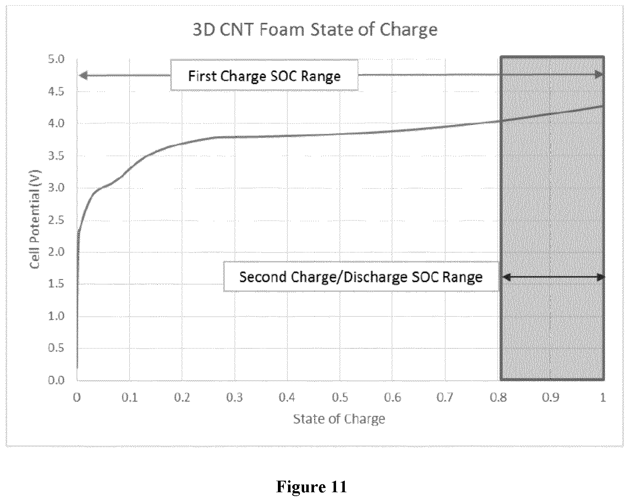

Additional insight into 3D CNT Foam and cell behavior can be seen in Figure 11 where the x-axis is the state of charge for the cathode (fraction of available Li transferred to the anode) and the y-axis is the corresponding voltage. The blue trace shows the voltage profile of the cell as it is charged, i.e. cobalt is oxidized in the cathode, releases lithium ion, and the lithium ion is either plated, intercalated, or captured by the anode.

During the first discharge, only 20% of the lithium is returned to the cathode, which means the cathode is still in its mostly charged state, i.e. higher voltage.

**Conclusions**

1. Electrical conductivity of the 3D CNT Foam is lower than commercial conductive aids, but cell ASI values do not indicate CNT conductivity is limiting factor in cell performance

2. The 3D CNT foam showed significant irreversible capacity loss, as expected for test as an anode

3. 3D CNT foam showed stable cycling performance, but it is not known if this performance was limited by lithium availability after SEI losses

4. dQ / dV versus V plots show significant change in performance of 3D CNT cells between first and second cycles. A better understanding of these results is necessary to improve cell performance. This objective is addressed in the Recommendations section.

5. While C/10 cycling conditions should be adequate to test fast reactions, it is unknown if the CNT reaction rates access all useful capacity.

6. Autopsy showed no lithium plating on 3D CNT Foam structure even at full charge.

**Autopsy**

Notes:

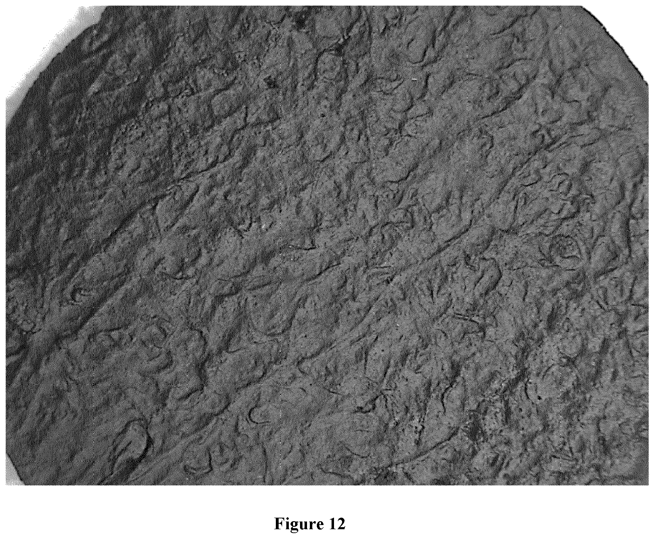

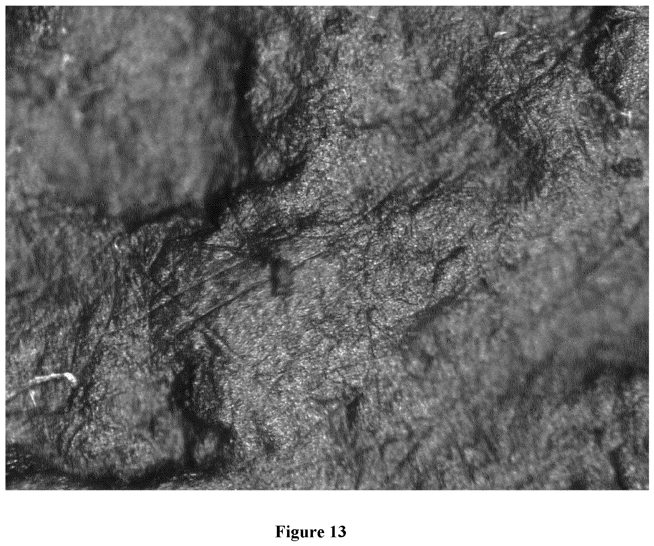

As shown in Figure 12, no lithium plating was observed on either side of the 3D CNT Foam, Whatman separator, or SS current collector. The same was observed at 10X magnification, as shown in Figure 13. Further, although lithium metal was present in the 3D CNT foam, there was no reaction when water was applied to the foam, in contrast to what would be seen if lithium metal was placed in contact with water.

The sample before wetting was much more flat and very small 3D structure was visible on 10X magnification. After wetting, 3D structure was not visible, and it appeared that the CNTs "expanded or swelled".

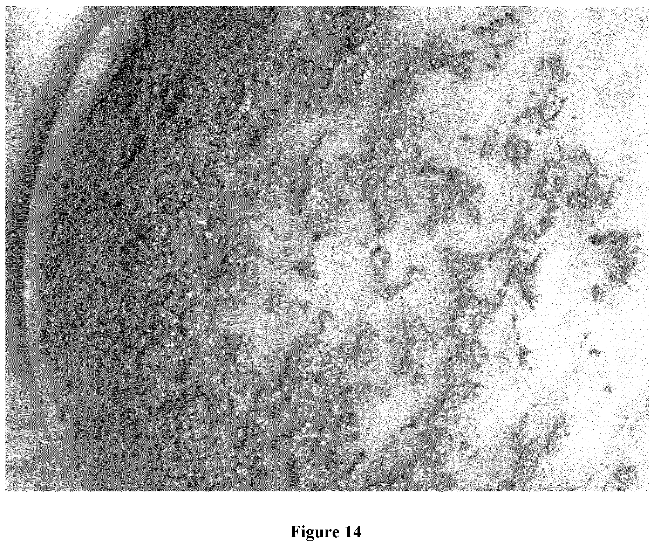

In contrast, when a stainless steel current collector was used, there was significant lithium plating between the Whatman separator and the SS current collector (data not shown). This system reacted violently with water, as shown in Figure 14.

**Example 2: Evaluation of 3D CNF Foams in Half-Cell Configurations vs. Lithium Metal**

The objective of this set of tests was to measure fundamental performance of the 3D CNT Foam in a half-cell configuration versus lithium metal.

The configuration of the test in a Swagelok cell is shown in Figure 3. Current was controlled at a specified rate and the voltage profile of the cell was measured during this current flow. The lithium disk supplied as much Li as the opposing electrode can use. This allowed the anode to reach full capacity without any lithium metal plating.

To be clear, intercalation of Li+ ions cannot penetrate the side-wall of a fully intact nanotube. Similar to graphite, the Li+ ion can only penetrate at the edges of the graphene structure, whether planar or cylindrical. If there is damage at some point in the nanotube wall (branching, dislocations...) then Li+ ions might have the ability to penetrate into the nanotube wall. This is also true in connection with concentric rings of multi-wall nanotubes, where Li+ ions have the potential to intercalate in between concentric CNT layers/rings or possibly between bundles of CNT fibers.

With the half-cell arrangement, there is no potential to create lithium metal dendrites on the electrode under test, i.e. 3D CNT Foam. As such, only lithium ion intercalation into the 3D CNT Foam structure was measured, to measure the intercalation capacity of the 3D CNT Foam.

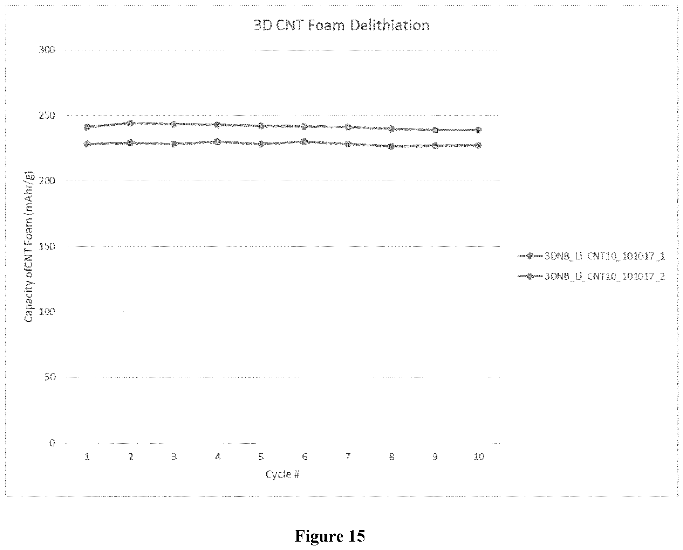

Figure 15 shows the cycling capacity at symmetric charge/discharge conditions of 0.35 mA. Given the actual capacity of the half-cell was 2.4 mAhr, this rate corresponds to approximately a C/7 rate. The CNT foam shows stable capacity over 10 cycles at 240 mAhr/g. The initial SEI charge was 358 mAhr/g, yielding an irreversible capacity loss (ICL) of 32% in a half cell configuration. This is in contrast to ICL in a lithium metal, full-cell, coin-cell configuration previously reported at ~80% ICL. To explain this discrepancy, we need to look into the data in more detail.

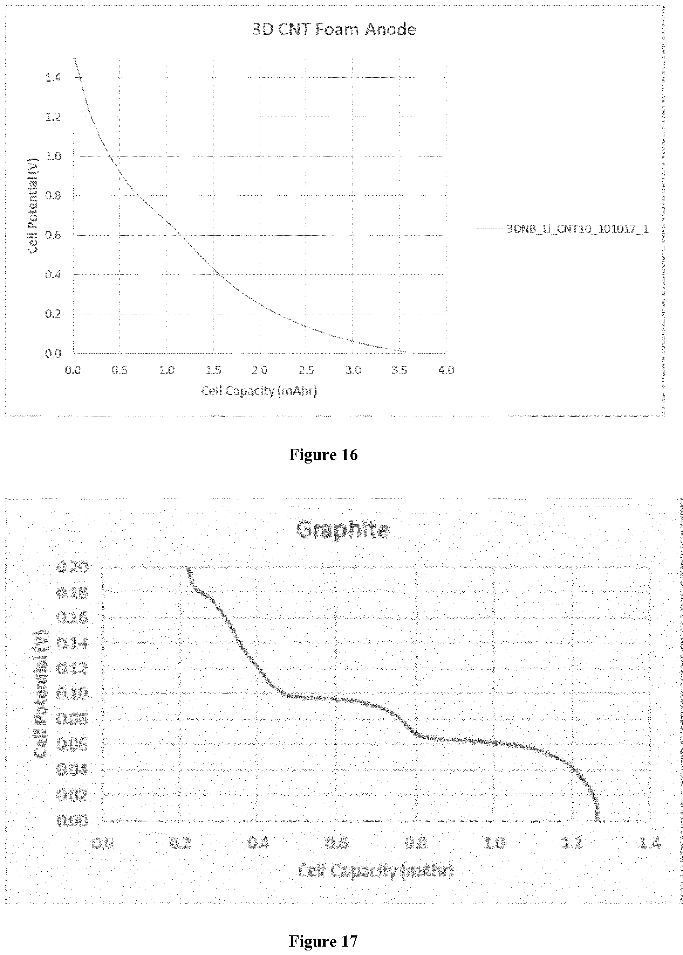

Conventional graphite anode lithiation is shown below in Figure 17 to compare behavior to the 3D CNT Foam. Figure 17 is a chart showing a current/voltage plot of the first CNT lithiation, in terms of cell potential (V) vs. cell capacity (mAhr/g). The features of interest in Figure 5 are the voltage plateaus at -0.18 V, 0.1 V, and 0.06V, corresponding to three lithiation states as reported in the literature. The voltage/current plot for the 3D CNT Foam in Figure 16 show some minor plateau behavior, but at significantly different voltages than graphite.

The importance of these results is in balancing a full cell for cathode/anode behavior must take into account the fact that the 3D CNT Foam has a significant capacity above 100 mV and even above 500 mV.

The impact of the elevated voltage of the 3D CNT foam is a difficult concept to fully appreciate. There are a few concepts in battery testing that can help understand the impact of elevated anode voltage. First, the cell voltage is measured as:

$$V_{cell} = V_{cath} - V_{an}$$

The only thing the battery tester knows is the cell voltage, i.e. electrical potential of the cathode connection minus the anode voltage. From chemistry we know the voltage of the anode cannot drop below the potential of lithium metal, but can be significantly higher. The voltage of the cathode material is therefore

$$V_{cath} = V_{cell} + V_{an}$$

If the voltage of the anode during charge is significantly above the lithium metal voltage, the actual voltage of the cathode will be pushed significantly above the "normal cell voltage". In the current example, given an anode potential of 0.5 volts during charge, can push the cathode voltage above 4.2 + 0.5 = 4.7 volts. This is an extreme condition, but is not out of the range of reality for a full cell of NMC versus 3D CNT Foam.

A much more thorough analysis must be completed to fully understand and define an appropriate anode/cathode capacity balance to avoid elevating the cathode voltage above stable conditions. As an example, NMC can cycle extensively at 4.2 volts, but can also cycle at higher voltages, i.e. 4.3, 4.4, and 4.5 voltages, but with increasing fade at higher voltages.

On information and belief, the discrepancy of ICL of the CNT/NMC versus CNT/Li cells is due to a significant increase of cathode voltage caused by the elevated anode voltage. Additional causes for the ICL discrepancy can also be influenced by anode:cathode capacity balance.

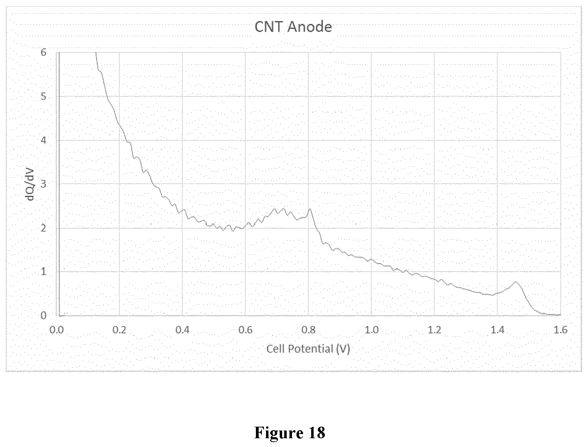

Figure 18 also supports a significant capacity above 0.1 volts versus lithium metal.

The intrinsic capacity of the 3D CNT Foam samples (-240 mAhr/g) is consistent with literature reports in the range of several hundred mAhr/g, depending on the specific type and morphology of the CNTs.

Rate testing at 0.072 mA, approximately C/30 showed only a small increase in capacity to 260 mAhr/g indicating there is no advantage to cycle the 3D CNT Foam at such low rates.

**Conclusions**

1. 3D CNT Foam half cells versus lithium metal show no significant fade over 10 cycles.

2. 3D CNT Foam cycling capacity at -240 mAhr/g, compared to graphite at 340 mAhr/g.

3. No significant gain in 3D CNT Foam capacity at C/7 versus C/30 cycling, i.e. no power limitation as modest cycle rates.

4. Unknown if the 3D CNT Foam samples are consistent or not, and might contribute to differences in first cycle losses.

5. Voltage profile of 3D CNT Foam is significantly different than graphite.

Concept Review

It is useful to develop a deeper understanding of how the concept of the 3D CNT Foam battery might work. The first step is a normal intercalation of Li+ INTO the inside of the CNT Tube, similar to how Li+ intercalates into a graphite structure. The lithium ion is attracted to the spacing of the graphene structure and is stabilized by the conduction band of electrons in the graphene/graphite structure. As an example, graphite commonly has a first charge capacity of 360 mAhr/g. Different graphites and different carbons can have significantly varying capacities, but usually lower than stated previously. In the current experiment, we determined the 3D CNT Foam has an intrinsic (maximum) capacity for Li+ (lithium ion, not metallic lithium) at ~ 240 mAhr/g. This is the first step in the battery charge, i.e. it is the most energetically favorable; so it will occur first.

The second step, that turns this into a Lithium metal battery with high capacity, is continued charge of lithium ions from the cathode that are then reduced at the anode (3D CNT Foam) and plate lithium metal onto the outside of the individual CNT strands. This means the lithium metal will plate inside the foam structure (i.e., not inside the CNT tube), utilizing high surface area to plate lithium metal in a reproducible manner.

Discharge of the Lithium Metal battery will simply reverse the process, where lithium metal on the outside of the CNT tubes, will release an electron (for use outside of the battery) and lithium ion will then migrate back to the cathode and be absorbed by the cathode active material, i.e. NMC or LCO. Once all of the lithium metal has all been oxidized (discharged), the lithium ions that are intercalated INSIDE the CNT tube, will release their electronic polarization (generate useable electrons similar to lithium metal oxidation) and migrate back to the cathode to be absorbed into the active cathode material.

This process should allow one to significantly improve the capacity of the 3D CNT Foam significantly above the 240 mAhr/g for just the lithium ion intercalation. A key feature of this design is the high surface area of the 3D CNTs, which allow lithium metal to plate uniformly without forming dendrites.

**Example 3: Evaluation of 3D CNF Foams in Full-Cell Configurations vs. Lithium Metal**

The objective of this set of tests was to measure fundamental performance of the 3D CNT Foam in a full-cell configuration versus lithium metal.

The 3D CNF data is based on the same LCO cathode or higher performance NCM variants. To

get the whole 100% increase in capacity, this compares conventional LCO/GRA to the 3D CNF

foam anode with higher performance NM811.

In the graph below, commercial cells are in the area of 500 Whr/L volumetric energy density (VED). **3D CNF Foams in Full-Cell Configurations** can double the capacity of a cell to -1000

Whr/L. This data is based on a real, commercially produced cell at 1.2 Ahr with external dimensions of 42 x 57 x 3.6 mm and high density LCO/GRA Cathode/Anode with N/P ratio of 1.1

## Our Preliminary Results

Lithium metal batteries allow for smaller anode thickness, thus higher Volumetric Energy Density!

Conventional Design
Conventional cathode:    ~110 μm
Conventional anode:      ~110 μm (graphite)
Conventional separator: ~20 μm

New 3D-NB Concept
Conventional cathode:    110 μm, incl. 14 μm Al foil
**3D-NB anode:**         30 μm, incl. 10 μm of Cu foil
Conventional separator:  20 μm

Volume ratio with same cathode (LCO) is:
~ (110 + 110+20)/ (110 + 30 + 20) =250/160  ~ 1.6

**~ 60% VED Increase**

*Confidential*

This data is based on a **real**, commercially produced cell at 1.2 Ahr with external dimensions of 42 x 57 x 3.6 mm and high density LCO/GRA Cathode/Anode with N/P ratio of 1.1

Here in this example Conventional cathode: -110 um cathode is energy loading, high loading, maximize active materials fraction in cell

Conventional anode: -110 um anode with graphite

Conventional separator: ~20 um

**3D CNF Foam Cell above:**

Conventional cathode 110 um, including 14 um aluminum foil

3D-NM anode, 30 um, including 10 um of copper foil

Conventional separator 20 um.

Volume ratio is ~ (110 + 110+20)/ (110 + 30 + 20) =250/160 ~ 1.6 ~ VED increase with same cathode.

Potential for Energy Density

Smaller anode thickness allows for the higher energy density!

*Confidential*

- Two stage lithiation

  ○ Intercalation into CNTs (everything in the anode participates in Li/Li+ storage.
  ○ Lithium metal plating 3D foam interstitial void space

- Dendrite/Lithium plating morphology is eliminated and/or controlled by

  ○ Intercalation of Li+ in CNT (minor component of capacity)
  ○ Encapsulating inside foam structure
  ○ Electrolyte formulation (build on existing lithium ion metal technology

Practical Solutions to Existing Lithium Metal Battery Limitations

- Volume change is eliminated

  ○ CNT foam structure is permanent, which avoids anode volume change

- Shape change of anode is eliminated

  ○ CNT foam structure is permanent and provides directed plating template
  ○ Tunable CNT Structure

    ▪ CNT diameters
    ▪ CNT spacing

- Foam thickness
- Resistance control via additives, i.e. boron
- Density of 3D structure via additives, i.e. boron

- Charge rate can be high since Foam structure addresses the dendrite formation

Benefits of **CNTs** as Foam Structure, compared to other materials like Cu, Ni, Si, Zn, Sn, Fe....

- CNTs are chemically stable 0 to +4.5 volts versus lithium metal
- CNTs have high tensile strength, increased mechanical stability with cell cycling
- CNTs constructed from carbon, low mass
- CNT foam >95% porosity is easily achieved.
- Existing and new methods of production

Additional Concepts

- Over mold or coat separator onto of 3D CNT foam. More dendrite suppression/containment, thinner separator
- Use CNTs as conductive aid in cathode to increase active material fraction to 97.9%, better power performance, more stable cycling...
- 3D CNT foam structure deposited on 10 um Cu foil.
- 3D CNT foam structure on Cu is COMMERCIALLY RELEVENT 20 um thickness to maximize cell capacity. Fully compatible with commercial cathode loadings...
- Uniform deposition of 3D CNT foam structure. Show SEM micrographs
- Demonstrated reversible intercalation of Li+ INTO 3D CNTs structure (half-cell lithium metal versus 3D CNT foam)

The above description is provided for the purpose of illustration, and it would be understood by those skilled in the art that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner. Likewise, components described to be distributed can be implemented in a combined manner.
The scope of the present disclosure is defined by the following claims rather than by the detailed description of the embodiment. It shall be understood that all modifications and embodiments conceived from the meaning and scope of the claims and their equivalents are included in the scope of the present disclosure.

**Claims**

1. An electrode comprising a three-dimensional, heteroatom-doped, carbon nanotube macromaterial, wherein the macromaterial is porous and wherein an active material is present in the pores, for example embedded or impregnated in the pores.

2. The electrode of Claim 1, wherein the electrode is an anode comprising a three-dimensional, heteroatom-doped, carbon nanotube porous macromaterial, such as a three-dimensional boron-containing carbon nanotube porous macromaterial.

3. The electrode of Claim 1, wherein the electrode is a cathode comprising a three-dimensional, heteroatom-doped, carbon nanotube porous macromaterial, such as a three-dimensional boron-containing carbon nanotube porous macromaterial.

4. The electrode of any one of Claims 1-3, wherein the active material is incorporated into the pores in a range of:

   (a) between 1 and 99% of the pore volume, or
   (b) between 10 and 99% of the pore volume, or
   (c) between 10 and 90% of the pore volume, or
   (d) between 25 and 75% of the pore volume.

5. The electrode of any one of Claims 1-4, wherein the electrode is an anode and the active material is selected from the group consisting of: lithium metal, a material that reversibly intercalates/deintercalates lithium ions, a lithium metal alloy, a material capable of doping and dedoping lithium, or a transition metal oxide; wherein the material capable of doping and dedoping lithium is optionally selected from: Si; SiOx where $0<x<2$; a Si-C composite; a Si-Q alloy where Q is an alkali metal, an alkaline-earth metal, Group 13 to Group 16 elements, a transition metal, a rare earth element or a combination thereof, and is not Si; Sn; $SnO_2$; a Sn-C composite; and Sn-R where R is an alkali metal, an alkaline-earth metal, Group 13 to Group 16 elements, a transition metal, a rare earth element or a combination thereof, and is not Sn.

6. The electrode of Claim 5, wherein the active material is lithium metal or an alloy comprising lithium.

7. The electrode of any one of Claims 1-4, wherein the electrode is a cathode and wherein the active material is selected from the group consisting of lithium oxide, lithium sulfide, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, $LiCoO_2$, $LiMn_2O_4$, $LiFePO_4$, $Li_{1-x}Fe_xPO_4$ ($0\leq x\leq 1$), $Li[Mn_{2-x}M_x]O_4$ (M=Co, Ni, Cr, Al, Mg, $0\leq x\leq 0.1$), $Li_aCoM_aO_2$, $Li_{1-b}CoM'_yO_2$ (M and M' represent W, Mo, Zr, Ti, Mg, Ta, Al, Fe, V, Cr, and/or Nb; $1\leq a\leq 1.2$, $0<b\leq 0.05$, $0\leq x\leq 0.02$ and $0\leq y\leq 0.02$), $LiNiO_2$, $LiNiMnCoO_2$, $Li_2FePO_4F$, $LiCo_{0.33}Ni_{0.33}Mn_{0.33}O_2$, $Li(Li_aNi_xMn_yCo_z)O_2$ (also known as NMC), $LiNiCoAlO_2$, $Li_4Ti_5O_{12}$, $Li_3V_2(PO_4)_3$, and combinations thereof.

8. The electrode of Claim 7, wherein the active material is lithium oxide or lithium sulfide.

9. The electrode of any one of Claims 1-8, wherein the electrode is formed on or adhered to a metal foil.

10. The electrode of Claim 9, wherein the metal foil is a copper foil or an aluminum foil.

11. The electrode of any one of Claims 1-10, wherein the three-dimensional heteroatom-doped, carbon nanotube porous macromaterial is formed using a CVD process, wherein said porous macromaterial is formed on a metal foil.

12. The electrode of any one of Claims 1-11, wherein the heteroatom is selected from boron, nitrogen, sulfur, and phosphorous.

13. The electrode of Claim 12, wherein the heteroatom is boron.

14. A battery comprising an electrode as defined in any one of Claims 1-13.

15. A capacitor or supercapacitor comprising an electrode as defined in any one of Claims 1-13.

**Figure 1**

**Figure 2**

**Figure 3**

**Figure 4**

**Figure 5**

**Figure 6**

**Figure 7**

**Figure 8**

**Figure 9**

**Figure 10**

**Figure 11**

Figure 12

**Figure 13**

**Figure 14**

**Figure 15**

**Figure 16**

**Figure 17**

**Figure 18**

**Figure 19**

Figure 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 62686420 A
- US 424185, Dr. Daniel Hashim
- US 9887403 B, Huang
- US 20070275299 A1